# EUROPEAN PATENT SPECIFICATION

(11) **EP 1 554 347 B1**
(45) Date of publication and mention of the grant of the patent: **30.05.2007**
(21) Application number: 03769501.2
(22) Date of filing: 30.09.2003
(51) Int. Cl.: C08L 61/14, C08G 8/28, G03F 7/105

(54) **POLYMER FOR HEAT-SENSITIVE LITHOGRAPHIC PRINTING PLATE PRECURSOR**
POLYMER FÜR WÄRMEEMFINDLICHER LITHOGRAPHISCHER DRUCKPLATTEVORLÄUFER
POLYMERE DESTINE A UN PRECURSEUR DE PLAQUE D'IMPRESSION LITHOGRAPHIQUE THERMOSENSIBLE

(30) Priority: 15.10.2002 EP 02102443; 24.10.2002 US 420973 P
(43) Date of publication of application: 20.07.2005
(73) Proprietor: Agfa Graphics N.V., 2640 Mortsel (BE)
(72) Inventor: LOCCUFIER, Johan, Agfa-Gevaert, Corp. IP Dept., B-2640 Mortsel (BE); GROENENDAAL, Bert, Agfa-Gevaert, Corp. IP Dept., B-2640 Mortsel (BE); VAN AERT, Huub, Agfa-Gevaert, Corporate IP Dept., B-2640 Mortsel (BE); VAN DAMME, Marc, Agfa-Gevaert, Corp. IP Dept., B-2640 Mortsel (BE)
(74) Representative: Goedeweeck, Rudi
(86) International application number: PCT/EP2003/050669
(87) International publication number: WO 2004/035687

(56) References cited:
- EP-A- 0 934 822
- EP-A- 0 982 123
- WO-A-91/19227
- GB-A- 1 330 932

## Description

### FIELD OF THE INVENTION

The present invention relates to a polymer for a heat-sensitive lithographic printing plate precursor.

### BACKGROUND OF THE INVENTION

Lithographic printing presses use a so-called printing master such as a printing plate which is mounted on a cylinder of the printing press. The master carries a lithographic image on its surface and a print is obtained by applying ink to said image and then transferring the ink from the master onto a receiver material, which is typically paper. In conventional, so-called "wet" lithographic printing, ink as well as an aqueous fountain solution (also called dampening liquid) are supplied to the lithographic image which consists of oleophilic (or hydrophobic, i.e. ink-accepting, water-repelling) areas as well as hydrophilic (or oleophobic, i.e. water-accepting, ink-repelling) areas. In so-called driographic printing, the lithographic image consists of ink-accepting and ink-abhesive (ink-repelling) areas and during driographic printing, only ink is supplied to the master.

Printing masters are generally obtained by the so-called computer-to-film method wherein various pre-press steps such as typeface selection, scanning, color separation, screening, trapping, layout and imposition are accomplished digitally and each color selection is transferred to graphic arts film using an image-setter. After processing, the film can be used as a mask for the exposure of an imaging material called plate precursor and after plate processing, a printing plate is obtained which can be used as a master.

A typical printing plate precursor for computer-to-film methods comprise a hydrophilic support and an image-recording layer of a photosensitive polymer layers which include UV-sensitive diazo compounds, dichromate-sensitized hydrophilic colloids and a large variety of synthetic photopolymers. Particularly diazo-sensitized systems are widely used. Upon image-wise exposure, typically by means of a film mask in a UV contact frame, the exposed image areas become insoluble and the unexposed areas remain soluble in an aqueous alkaline developer. The plate is then processed with the developer to remove the diazonium salt or diazo resin in the unexposed areas. So the exposed areas define the image areas (printing areas) of the printing master, and such printing plate precursors are therefore called 'negative-working'. Also positive-working materials, wherein the exposed areas define the non-printing areas, are known, e.g. plates having a novolac/naphtoquinone-diazide coating which dissolves in the developer only at exposed areas.

In addition to the above photosensitive materials, also heat-sensitive printing plate precursors have become very popular. Such thermal materials offer the advantage of daylight-stability and are especially used in the so-called computer-to-plate method wherein the plate precursor is directly exposed, i.e. without the use of a film mask. The material is exposed to heat or to infrared light and the generated heat triggers a (physico-)chemical process, such as ablation, polymerization, insolubilisation by cross-linking of a polymer, heat-induced solubilisation, decomposition, or particle coagulation of a thermoplastic polymer latex.

The known heat-sensitive printing plate precursors typically comprise a hydrophilic support and a coating containing an oleophilic polymer, which is alkali-soluble in exposed areas (positive working material) or in non-exposed areas (negative working material) and an IR-absorbing compound. Such an oleophilic polymer is typically a phenolic resin.

WO99/01795 describes a method for preparing a positive working resist pattern on a substrate wherein the coating composition comprises a polymeric substance having functional groups such that the functionalised polymeric substance has the property that it is developer insoluble prior to delivery of radiation and developer soluble thereafter. Suitable functional groups are known to favor hydrogen bonding and may comprise amino, amido, chloro, fluoro, carbonyl, sulphinyl and sulphonyl groups and these groups are bonded to the polymeric substance by an esterification reaction with the phenolic hydroxy group to form a resin ester.

EP-A 0 934 822 describes a photosensitive composition for a lithographic printing plate wherein the composition contains an alkali-soluble resin having phenolic hydroxyl groups and of which at least some of the phenolic hydroxyl groups are esterified by a sulphonic acid or a carboxylic acid compound.

EP-A 1 072 432 describes an image forming material which comprises a recording layer which is formed of a composition whose solubility in water or in an alkali aqueous solution is altered by the effects of light or heat. This recording layer comprises a polymer of vinyl phenol or a phenolic polymer, wherein hydroxy groups and alkoxy groups are directly linked to the aromatic hydrocarbon ring. The alkoxy group is composed of 20 or less carbon atoms.

US 5 641 608 describes a direct process for producing an imaged pattern on a substrate surface for printed circuit board application. The process utilises a thermo-resist composition which undergo a thermally-induced chemical transformation effective either to ablate the composition or to increase or decrease its solubility in a particular developer. The thermo-resist composition comprises phenolic polymers in which free hydroxyl groups are protected. Upon heating in the presence of an acid these protecting groups split off resulting in a solubility change of the composition. In positive thermo-resists the hydroxyl protecting groups may be ethers, such as alkyl-, benzyl-, cycloalkyl- or trialkylsilyl-ethers, and oxycarbonyl groups.

EP-A 0 982 123 describes a photosensitive resin composition or recording material wherein the binder is a phenolic polymer which is substituted with a specific functional group on the aromatic hydrocarbon ring such as a halogen atom, an alkyl group having 12 or less carbon atoms, an alkoxy group, an alkylthio group, a cyano group, a nitro group and a trifluoromethyl group or wherein the hydrogen atom of the hydroxy group is substituted with a specific functional group such as an amide, a thioamide and a sulphonamide group. As a result , the film thus formed has such a high density that improves the intra-film transistivity of heat obtained by the light-to-heat conversion at the time of laser exposure. The high density of the film makes the image recording material less susceptible to external influences such as humidity and temperature. Consequently, the storage stability of the image recording material can also be enhanced.

GB-A-1330932 discloses a light-sensitive composition for positive photomechanical processes comprising a condensation product having substituted phenolic groups in the backbone. Among the possible substituents is an aryl-S group.

The ink and fountain solution which are supplied to the plate during the printing process, may attack the coating and, consequently, the resistance of the coating against these liquids, hereinafter referred to as "chemical resistance", may affect the printing run length. The most widely used polymers in these coatings are phenolic resins and it has been found in the above prior art that the printing run length can be improved by modifying such resins by a chemical substitution reaction on the hydroxyl group of the phenolic group. However, this modification reaction decreases the number of free hydroxyl groups on the polymer and thereby reduces the solubility of the coating in an alkaline developer. The modification reaction proposed in the present invention enables to increase the chemical resistance of the coating without substantially reducing the developability of the coating.

### SUMMARY OF THE INVENTION

It is an aspect of the present invention to provide a polymer comprising a phenolic monomeric unit wherein the phenyl group of the phenolic monomeric unit is substituted by a group having the structure -S-(L)ₖ-Q wherein S is covalently bound to a carbon atom of the phenyl group, wherein L is a linking group, wherein k is 0 or 1 and wherein Q comprises a heterocyclic group.

It is also an aspect of the present invention to provide a polymer as defined in claim 1, for a heat-sensitive lithographic printing plate precursor wherein the chemical resistance of the heat-sensitive coating against printing liquids and press chemicals is improved.

Specific embodiments of the invention are defined in the dependent claims.

### DETAILED DESCRIPTION OF THE INVENTION

In order to obtain a heat-sensitive lithographic printing plate with an improved printing run length, it is important to increase the chemical resistance of the heat-sensitive coating against the printing liquids such as the dampening liquid and ink, and against the press chemicals such as cleaning liquids for the plate, for the blanket and for the press rollers. These printing properties are affected by the composition of the coating wherein the type of polymer is one of the most important components for this property.

In accordance with the present invention, there is provided a polymer, which comprises a phenolic monomeric unit wherein the phenyl group of the phenolic monomeric unit is substituted by a group having the structure -S-(L)ₖ-Q wherein S is covalently bound to a carbon atom of the phenyl group, wherein L is a linking group, wherein k is 0 or 1 and wherein Q comprises a heterocyclic group.

It is also an aspect of the present invention that there is provided a heat-sensitive lithographic printing plate precursor comprising a support having a hydrophilic surface and an oleophilic coating, said coating comprising this polymer and an infrared absorbing agent.

It is also an aspect of the present invention that the oleophilic coating comprising this polymer has an increased chemical resistance due to the modification of the polymer by this specified substituting group having the structure -S-(L)ₖ-Q wherein S is covalently bound to a carbon atom of the phenyl group, wherein L is a linking group, wherein k is 0 or 1 and wherein Q comprises a heterocyclic group. This chemical resistance can be measured by tests described in the examples.

In accordance with a preferred embodiment of the present invention, the heterocyclic group is aromatic.

In accordance with another preferred embodiment of the present invention, the heterocyclic group contains at least one nitrogen atom in the ring of the heterocyclic group.

In accordance with another preferred embodiment of the present invention, the heterocyclic group has a 5- or 6-membered ring structure, optionally annelated with another ring system.

In accordance with another preferred embodiment of the present invention, the heterocyclic group is selected from an optionally substituted tetrazole, triazole, thiadiazole, oxadiazole, imidazole, benzimidazole, thiazole, benzthiazole, oxazole, benzoxazole, pyrazole, pyrrole, pyrimidine, pyrasine, pyridasine, triazine or pyridine group.

In accordance with another preferred embodiment of the present invention, the group -S-(L)ₖ-Q comprises the following formula 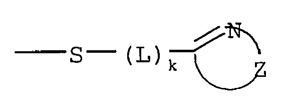 wherein Z represents the necessary atoms to form a 5- or 6-membered heterocyclic aromatic group, optionally annelated with another ring system.

In accordance with another preferred embodiment of the present invention, the group -S-(L)ₖ-Q comprises the following formula 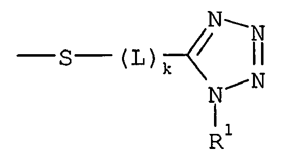 wherein R¹ is selected from hydrogen or an optionally substituted alkyl, alkenyl, alkynyl, cycloalkyl, heterocyclic, aryl, heteroaryl, aralkyl or heteroaralkyl group.

In accordance with another preferred embodiment of the present invention, the group -S-(L)ₖ-Q comprises the following formula. 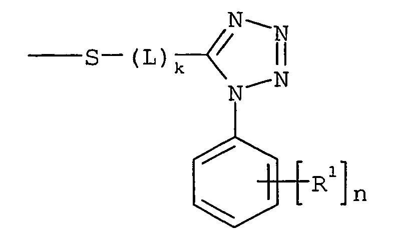 wherein n is 0, 1, 2, 3, 4 or 5,
wherein each R¹ is independently selected from hydrogen, an optionally substituted alkyl, alkenyl, alkynyl, cycloalkyl, heterocyclic, aryl, heteroaryl, aralkyl or heteroaralkyl group, halogen, -SO₂-NH-R², -NH-SO₂-R⁵, -CO-NR²-R³, -NR²-CO-R⁵, -NR²-CO-NR³-R⁴, -NR²-CS-NR³-R⁴, -NR²-CO-O-R³, -O-CO-NR²-R³, -O-CO-R⁵, -CO-O-R², -CO-R², -SO₃-R², -O-SO₂-R⁵, -SO₂-R², -SO-R⁵, -P(=O)(-O-R²)(-O-R³), -O-P(=O)(-O-R²)(-O-R³), -NR²-R³, -O-R², -S-R², -CN, -NO₂ or -M-R², wherein M represents a divalent linking group containing 1 to 8 carbon atoms,
wherein R² to R⁴ are independently selected from hydrogen or an optionally substituted alkyl, alkenyl, alkynyl, cycloalkyl, heterocyclic, aryl, heteroaryl, aralkyl or heteroaralkyl group,
wherein R⁵ is an optionally substituted alkyl, alkenyl, alkynyl, cycloalkyl, heterocyclic, aryl, heteroaryl, aralkyl or heteroaralkyl group,
or wherein at least two groups selected from each R¹, R², R³, R⁴ and R⁵ together represent the necessary atoms to form a cyclic structure.

In accordance with another preferred embodiment of the present invention, the group -S-(L)ₖ-Q comprises the following formula 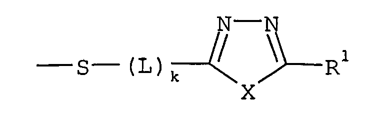 wherein X is O, S or NR³,
wherein R¹ is selected from hydrogen, an optionally substituted alkyl, alkenyl, alkynyl, cycloalkyl, heterocyclic, aryl, heteroaryl, aralkyl or heteroaralkyl group, halogen or -L¹-R²,
wherein L¹ is a linking group,
wherein R² is selected from hydrogen, an optionally substituted alkyl, alkenyl, alkynyl, cycloalkyl, heterocyclic, aryl, heteroaryl, aralkyl or heteroaralkyl group, halogen or -CN,
wherein R³ is selected from hydrogen or an optionally substituted alkyl, alkenyl, alkynyl, cycloalkyl, heterocyclic, aryl, heteroaryl, aralkyl or heteroaralkyl group,
or wherein at least two groups selected from R¹, R² and R³ represent the necessary atoms to form a cyclic structure.

In accordance with another preferred embodiment of the present invention, the group -S-(L)ₖ-Q comprises the following formula 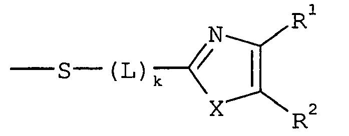 wherein X is O, S or NR⁴,
wherein R¹ and R² are independently selected from hydrogen, an optionally substituted alkyl, alkenyl, alkynyl, cycloalkyl, heterocyclic, aryl, heteroaryl, aralkyl or heteroaralkyl group, halogen or -L¹-R³,
wherein L¹ is a linking group,
wherein R³ is selected from hydrogen, an optionally substituted alkyl, alkenyl, alkynyl, cycloalkyl, heterocyclic, aryl, heteroaryl, aralkyl or heteroaralkyl group, halogen or -CN,
wherein R⁴ is selected from hydrogen or an optionally substituted alkyl, alkenyl, alkynyl, cycloalkyl, heterocyclic, aryl, heteroaryl, aralkyl or heteroaralkyl group,
or wherein at least two groups selected from R¹, R², R³ and R⁴ together represent the necessary atoms to form a cyclic structure.

In accordance with another preferred embodiment of the present invention, the group -S-(L)ₖ-Q comprises the following formula 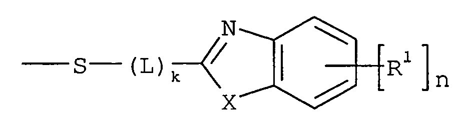 wherein n is 0, 1, 2, 3 or 4, wherein X is O, S or NR⁵,
wherein each R¹ is independently selected from hydrogen, an optionally substituted alkyl, alkenyl, alkynyl, cycloalkyl, heterocyclic, aryl, heteroaryl, aralkyl or heteroaralkyl group, halogen, -SO₂-NH-R², -NH-SO₂-R⁶, -CO-NR²-R³, -NR²-CO-R⁶, -NR²-CO-NR³-R⁴, -NR²-CS-NR³-R⁴, -NR²-CO-O-R³, -O-CO-NR²-R³, -O-CO-R⁶, -CO-O-R², -CO-R², -SO₃-R², -O-SO₂-R⁶, -SO₂-R², -SO-R⁶, -P(=O)(-O-R²)(-O-R³), -O-P(=O)(-O-R²)(-O-R³), -NR²-R³, -O-R², -S-R², -CN, -NO₂ or -M-R², wherein M represents a divalent linking group containing 1 to 8 carbon atoms,
wherein R² to R⁵ are independently selected from hydrogen or an optionally substituted alkyl, alkenyl, alkynyl, cycloalkyl, heterocyclic, aryl, heteroaryl, aralkyl or heteroaralkyl group,
wherein R⁶ is an optionally substituted alkyl, alkenyl, alkynyl, cycloalkyl, heterocyclic, aryl, heteroaryl, aralkyl or heteroaralkyl group,
or wherein at least two groups selected from each R¹, R², R³, R⁴, R⁵ and R⁶ represent the necessary atoms to form a cyclic structure.

In accordance with another preferred embodiment of the present invention, the group -S-(L)ₖ-Q comprises the following formula 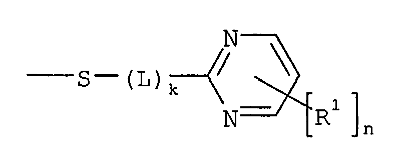 wherein n is 0, 1, 2 or 3,
wherein each R¹ is independently selected from hydrogen, an optionally substituted alkyl, alkenyl, alkynyl, cycloalkyl, heterocyclic, aryl, heteroaryl, aralkyl or heteroaralkyl group, halogen, -SO₂-NH-R², -NH-SO₂-R⁵, -CO-NR²-R³, -NR²-CO-R⁵, -NR²-CO-NR³-R⁴, -NR²-CS-NR³-R⁴, -NR²-CO-O-R³, -O-CO-NR²-R³, -O-CO-R⁵, -CO-O-R², -CO-R², -SO₃-R², -O-SO₂-R⁵, -SO₂-R², -SO-R⁵, -P(=O)(-O-R²)(-O-R³), -O-P(=O)(-O-R²)(-O-R³), -NR²-R³, -O-R², -S-R², -CN, -NO₂ or -M-R², wherein M represents a divalent linking group containing 1 to 8 carbon atoms,
wherein R² to R⁴ are independently selected from hydrogen or an optionally substituted alkyl, alkenyl, alkynyl, cycloalkyl, heterocyclic, aryl, heteroaryl, aralkyl or heteroaralkyl group,
wherein R⁵ is an optionally substituted alkyl, alkenyl, alkynyl, cycloalkyl, heterocyclic, aryl, heteroaryl, aralkyl or heteroaralkyl group,
or wherein at least two groups selected from each R¹, R², R³, R⁴ and R⁵ together represent the necessary atoms to form a cyclic structure.

In accordance with another preferred embodiment of the present invention, the group Q further comprises the following substituent 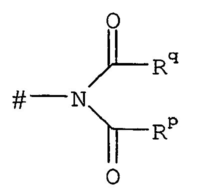 wherein # denotes the bond between said substituent and Q,
wherein R^{q} and R^{p} are independently selected from an optionally substituted alkyl, alkenyl, alkynyl, cycloalkyl, heterocyclic, aryl, heteroaryl, aralkyl or heteroaralkyl group, or -L^{r}-R^{t}, wherein L^{r} is a linking group,
wherein R^{t} is selected from hydrogen, an optionally substituted alkyl, alkenyl, alkynyl, cycloalkyl, heterocyclic, aryl, heteroaryl, aralkyl or heteroaralkyl group or halogen,
or wherein at least two groups selected from R^{q}, R^{p} and R^{t} together represent the necessary atoms to form a cyclic structure.

In accordance with another preferred embodiment of the present invention, the group Q further comprises the following substituent 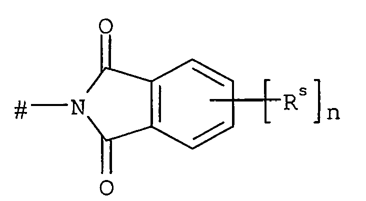 wherein # denotes the bond between said substituent and Q,
wherein n is 0, 1, 2, 3 or 4,
wherein each R^{s} is independently selected from hydrogen, an optionally substituted alkyl, alkenyl, alkynyl, cycloalkyl, heterocyclic, aryl, heteroaryl, aralkyl or heteroaralkyl group, halogen, -SO₂-NH-R^{x}, -NH-SO₂-R^{w}, -CO-NR^{x}-R^{y}, -NR^{x}-CO-R^{w}, -NR^{x}-CO-NR^{y}-R^{z}, -NR^{x}-CS-NR^{y}-R^{z}, -NR^{x}-CO-O-R^{y}, -O-CO-NR^{x}-R^{y}, -O-CO-R^{w}, -CO-O-R^{x}, -CO-R^{x}, -SO₃-R^{x}, -O-SO₂-R^{w}, -SO₂-R^{x}, -SO-R^{w}, -P(=O)(-O-R^{x})(-O-R^{y}), -O-P(=O)(O-R^{x})(-O-R^{y}), -NR^{x}-R^{y}, O-R^{x}, -S-R^{x}, -CN, -NO₂ or -M-R^{x}, wherein M represents a divalent linking group containing 1 to 8 carbon atoms,
wherein R^{x}, R^{y} and R^{z} are independently selected from hydrogen or an optionally substituted alkyl, alkenyl, alkynyl, cycloalkyl, heterocyclic, aryl, heteroaryl, aralkyl or heteroaralkyl group,
wherein R^{w} is an optionally substituted alkyl, alkenyl, alkynyl, cycloalkyl, heterocyclic, aryl, heteroaryl, aralkyl or heteroaralkyl group,
or wherein at least two groups selected from R^{s}, R^{x}, R^{y}, R^{z} and R^{w} together represent the necessary atoms to form a cyclic structure.

In accordance with another preferred embodiment of the present invention, the group -S-(L)ₖ-Q comprises one of the following formula:

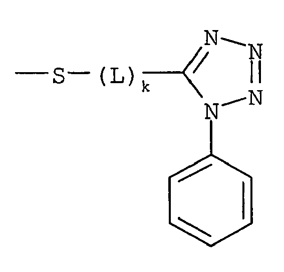

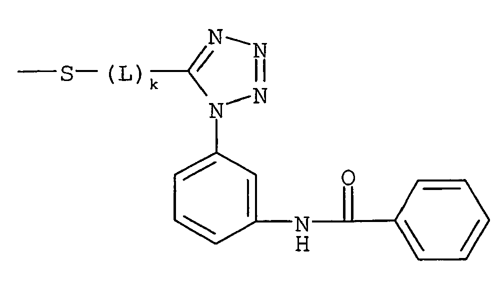

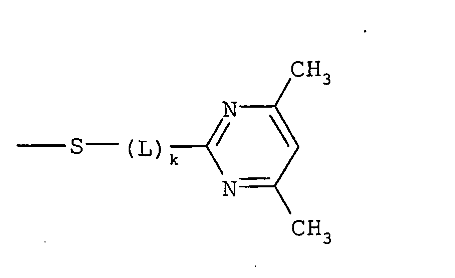

Examples of linking groups are -CO-, -CO-O-, -CS-, -NR^{a}R^{b}-, -CO-NR^{a}-, -NR^{a}-CO-, -NR^{a}-CO-O-, -NR^{a}-CO-NR^{b}-, -NR^{a}-CS-NR^{b}-, -NH-SO₂-, -SO₂-NH-, -(CR^{a}R^{b})ₜ-, an alkylene such -CH₂-, -CH₂-CH₂-,-CH₂-(CH₂)ₙ-CH₂-, an arylene such as phenylene or naphtalene, a divalent heterocyclic group or suitable combinations thereof. Herein represent n and t an integer between 1 and 8 and represent R^{a} and R^{b} a group selected from hydrogen or an optionally substituted alkyl, alkenyl, alkynyl, cycloalkyl, heterocyclic, aryl, heteroaryl, aralkyl or heteroaralkyl group.

The polymers of this invention can be obtained via several routes, e.g. by reaction of a reactive compound comprising a heterocyclic group with a phenyl group of a polymer containing a phenolic monomeric unit. The polymers of this invention can also be obtained by reaction of a reactive compound comprising a heterocyclic group with the phenyl group a phenolic monomer and subsequently polymerising or polycondensating this reacted monomer. These pre-modified monomers can preferentially be copolymerised or copolycondensated with other monomers.

Such a reactive compound comprising a heterocyclic group, herein after also referred to as a "modifying reagens", is a compound having the formula X-S-(L)ₖ-Q wherein L is a linking group, wherein k is 0 or 1, wherein Q comprises a heterocyclic group and wherein X represents a functional group, capable of reacting with the phenyl group of the phenolic unit, or a precursor for such a functional group. Examples of suitable functional groups or precursors for this substitution reaction on the phenyl group, are a halogen atom such as Cl, Br or I, or a hydrogen atom which can be replaced by a halogen atom on reaction with a halogenating compound such as SO₂Cl₂.

Examples of modifying reagens are:
MR-01: 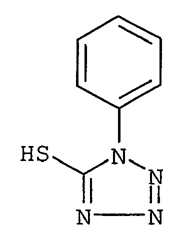
MR-02: 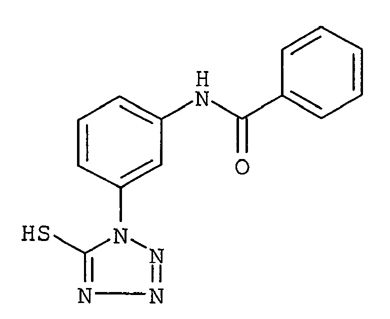
MR-05: 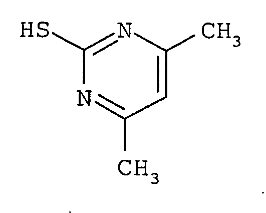
MR-08:

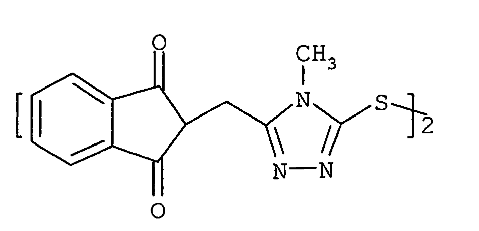

Polymers containing phenolic monomeric units can be a random, an alternating, a block or graft copolymer of different monomers and may be selected from e.g. polymers or copolymers of vinylphenol, novolac resins or resol resins. A novolac resin is preferred.

The novolac resin or resol resin may be prepared by polycondensation of at least one member selected from aromatic hydrocarbons such as phenol, o-cresol, p-cresol, m-cresol, 2,5-xylenol, 3,5-xylenol, resorcinol, pyrogallol, bisphenol, bisphenol A, trisphenol, o-ethylphenol, p-etylphenol, propylphenol, n-butylphenol, t-butylphenol, 1-naphtol and 2-naphtol, with at least one aldehyde or ketone selected from aldehydes such as formaldehyde, glyoxal, acetoaldehyde, propionaldehyde, benzaldehyde and furfural and ketones such as acetone, methyl ethyl ketone and methyl isobutyl ketone, in the presence of an acid catalyst. Instead of formaldehyde and acetaldehyde, paraformaldehyde and paraldehyde may, respectively, be used.

The weight average molecular weight, measured by gel permeation chromatography using universal calibration and polystyrene standards, of the novolac resin is preferably from 500 to 150,000 g/mol, more preferably from 1,500 to 15,000 g/mol.

The poly(vinylphenol) resin may also be a polymer of one or more hydroxy-phenyl containing monomers such as hydroxystyrenes or hydroxy-phenyl (meth)acrylates. Examples of such hydroxystyrenes are o-hydroxystyrene, m-hydroxystyrene, p-hydroxystyrene, 2-(o-hydroxyphenyl)propylene, 2-(m-hydroxyphenyl)propylene and 2-(p-hydroxyphenyl)propylene. Such a hydroxystyrene may have a substituent such as chlorine, bromine, iodine, fluorine or a C₁₋₄ alkyl group, on its aromatic ring. An example of such hydroxy-phenyl (meth)acrylate is 2-hydroxy-phenyl methacrylate.

The poly(vinylphenol) resin may usually be prepared by polymerizing one or more hydroxy-phenyl containing monomer in the presence of a radical initiator or a cationic polymerization initiator. The poly(vinylphenol) resin may also be prepared by copolymerizing one or more of these hydroxy-phenyl containing monomers with other monomeric compounds such as acrylate monomers, methacrylate monomers, acrylamide monomers, methacrylamide monomers, vinyl monomers, aromatic vinyl monomers or diene monomers.

The weight average molecular weight, measured by gel permeation chromatography using universal calibration and polystyrene standards, of the poly(vinylphenol) resin is preferably from 1.000 to 200,000 g/mol, more preferably from 1,500 to 50,000 g/mol.

Examples of polymers containing phenolic monomeric units which can be modified with a modifying reagens are:
- POL-01:: ALNOVOL SPN452 is a solution of a novolac resin, 40 % by weight in Dowanol PM, obtained from CLARIANT GmbH.
Dowanol PM consists of 1-methoxy-2-propanol (>99.5 %) and 2-methoxy-1-propanol (<0.5 %).
- POL-02:: ALNOVOL SPN400 is a solution of a novolac resin, 44 % by weight in Dowanol PMA, obtained from CLARIANT GmbH.
Dowanol PMA consists of 2-methoxy-1-methyl-ethylacetate.
- POL-03:: ALNOVOL HPN100 a novolac resin obtained from CLARIANT GmbH.
- POL-04:: DURITE PD443 is a novolac resin obtained from BORDEN CHEM. INC.
- POL-05:: DURITE SD423A is a novolac resin obtained from BORDEN CHEM. INC.
- POL-06:: DURITE SD126A is a novolac resin obtained from BORDEN CHEM. INC.
- POL-07:: BAKELITE 6866LB02 is a novolac resin obtained from BAKELITE AG.
- POL-08:: BAKELITE 6866LB03 is a novolac resin obtained from BAKELITE AG.
- POL-09:: KR 400/8 is a novolac resin obtained from KOYO CHEMICALS INC.
- POL-10:: HRJ 1085 is a novolac resin obtained from SCHNECTADY INTERNATIONAL INC.
- POL-11:: HRJ 2606 is a phenol novolac resin obtained from SCHNECTADY INTERNATIONAL INC.
- POL-12:: LYNCUR CMM is a copolymer of 4-hydroxy-styrene and methyl methacrylate obtained from SIBER HEGNER.

The polymer of the present invention may contain more than one type of a -S-(L)ₖ-Q group. In this situation each type of -S-(L)ₖ-Q groups can be incorporated successively, or it is also possible to react a mixture of different modifying reagentia. The preferred amount of each type of -S-(L)ₖ-Q group incorporated on the polymer is between 0.5 mol % and 80 mol %, more preferably between 1 mol % and 50 mol %, most preferably 2 mol % and 30 mol %.

According to another aspect of the present invention, the above polymer is used in the coating of a lithographic printing plate precursor. According to one embodiment, the printing plate precursor is positive-working, i.e. after exposure and development the exposed areas of the oleophilic layer are removed from the support and define hydrophilic, non-image (non-printing) areas, whereas the unexposed layer is not removed from the support and defines an oleophilic image (printing) area. According to another embodiment, the printing plate precursor is negative-working, i.e. the image areas correspond to the exposed areas.

Other polymers, such as unmodified phenolic resins or phenolic resins with another modification than described in the present invention, can also be added to the coating composition. The polymer of the present invention is preferably added to the coating in a concentration range of 5 % by weight to 98 % by weight of the total coating, more preferably between 10 % by weight to 95 % by weight.

If the heat-sensitive coating is composed of more than one layer, the polymer of the present invention is present in at least one of these layers, e.g. in a top-layer. The polymer can also be present in more than one layer of the coating, e.g. in a top-layer and in an intermediate layer.

The support has a hydrophilic surface or is provided with a hydrophilic layer. The support may be a sheet-like material such as a plate or it may be a cylindrical element such as a sleeve which can be slid around a print cylinder of a printing press. Preferably, the support is a metal support such as aluminum or stainless steel.

A particularly preferred lithographic support is an electrochemically grained and anodized aluminum support.

Graining and anodizing of aluminum lithographic supports is well known. The grained aluminum support used in the material of the present invention is preferably an electrochemically grained support. The acid used for graining can be e.g. nitric acid. The acid used for graining preferably comprises hydrogen chloride. Also mixtures of e.g. hydrogen chloride and acetic acid can be used.

The grained and anodized aluminum support may be post-treated to improve the hydrophilic properties of its surface. For example, the aluminum support may be silicated by treating its surface with a sodium silicate solution at elevated temperature, e.g. 95°C. Alternatively, a phosphate treatment may be applied which involves treating the aluminum oxide surface with a phosphate solution that may further contain an inorganic fluoride. Further, the aluminum oxide surface may be rinsed with an organic acid and/or salt thereof, e.g. carboxylic acids, hydroxycarboxylic acids, sulfonic acids or phosphonic acids, or their salts, e.g. succinates, phosphates, phosphonates, sulfates, and sulfonates. A citric acid or citrate solution is preferred. This treatment may be carried out at room temperature or may be carried out at a slightly elevated temperature of about 30 to 50°C. A further post-treatment involves rinsing the aluminum oxide surface with a bicarbonate solution. Still further, the aluminum oxide surface may be treated with polyvinylphosphonic acid, polyvinylmethylphosphonic acid, phosphoric acid esters of polyvinyl alcohol, polyvinylsulfonic acid, polyvinylbenzenesulfonic acid, sulfuric acid esters of polyvinyl alcohol, and acetals of polyvinyl alcohols formed by reaction with a sulfonated aliphatic aldehyde. It is further evident that one or more of these post-treatments may be carried out alone or in combination. More detailed descriptions of these treatments are given in GB-A- 1 084 070, DE-A- 4 423 140, DE-A- 4 417 907, EP-A- 659 909, EP-A- 537 633, DE-A- 4 001 466, EP-A- 292 801, EP-A- 291 760 and US-P- 4 458 005.

According to another embodiment, the support can also be a flexible support, which is provided with a hydrophilic layer, hereinafter called 'base layer'. The flexible support is e.g. paper, plastic film, thin aluminum or a laminate thereof. Preferred examples of plastic film are polyethylene terephthalate film, polyethylene naphthalate film, cellulose acetate film, polystyrene film, polycarbonate film, etc. The plastic film support may be opaque or transparent.

The base layer is preferably a cross-linked hydrophilic layer obtained from a hydrophilic binder cross-linked with a hardening agent such as formaldehyde, glyoxal, polyisocyanate or a hydrolyzed tetra-alkylorthosilicate. The latter is particularly preferred. The thickness of the hydrophilic base layer may vary in the range of 0.2 to 25 µm and is preferably 1 to 10 µm.

The hydrophilic binder for use in the base layer is e.g. a hydrophilic (co)polymer such as homopolymers and copolymers of vinyl alcohol, acrylamide, methylol acrylamide, methylol methacrylamide, acrylic acid, methacrylic acid, hydroxyethyl acrylate, hydroxyethyl methacrylate or maleic anhydride/vinylmethylether copolymers. The hydrophilicity of the (co)polymer or (co)polymer mixture used is preferably the same as or higher than the hydrophilicity of polyvinyl acetate hydrolyzed to at least an extent of 60% by weight, preferably 80% by weight.

The amount of hardening agent, in particular tetraalkyl orthosilicate, is preferably at least 0.2 parts per part by weight of hydrophilic binder, more preferably between 0.5 and 5 parts by weight, most preferably between 1 parts and 3 parts by weight.

The hydrophilic base layer may also contain substances that increase the mechanical strength and the porosity of the layer. For this purpose colloidal silica may be used. The colloidal silica employed may be in the form of any commercially available water dispersion of colloidal silica for example having an average particle size up to 40 nm, e.g. 20 nm. In addition inert particles of larger size than the colloidal silica may be added e.g. silica prepared according to Stöber as described in J. Colloid and Interface Sci., Vol. 26, 1968, pages 62 to 69 or alumina particles or particles having an average diameter of at least 100 nm which are particles of titanium dioxide or other heavy metal oxides. By incorporating these particles the surface of the hydrophilic base layer is given a uniform rough texture consisting of microscopic hills and valleys, which serve as storage places for water in background areas.

Particular examples of suitable hydrophilic base layers for use in accordance with the present invention are disclosed in EP-A- 601 240, GB-P- 1 419 512, FR-P- 2 300 354, US-P- 3 971 660, and US-P- 4 284 705.

It is particularly preferred to use a film support to which an adhesion improving layer, also called support layer, has been provided. Particularly suitable adhesion improving layers for use in accordance with the present invention comprise a hydrophilic binder and colloidal silica as disclosed in EP-A- 619 524, EP-A- 620 502 and EP-A- 619 525. Preferably, the amount of silica in the adhesion improving layer is between 200 mg/m² and 750 mg/m². Further, the ratio of silica to hydrophilic binder is preferably more than 1 and the surface area of the colloidal silica is preferably at least 300 m²/gram, more preferably at least 500 m²/gram.

The coating provided on the support is heat-sensitive and can preferably be handled in normal working lighting conditions (daylight, fluorescent light) for several hours. The coating preferably does not contain UV-sensitive compounds which have an absorption maximum in the wavelength range of 200 nm to 400 nm such as diazo compounds, photoacids, photoinitiators, quinone diazides, or sensitizers. Preferably the coating neither contains compounds which have an absorption maximum in the blue and green visible light wavelength range between 400 and 600 nm.

The coating may comprise one or more distinct layers. Besides the layers discussed hereafter, the coating may further comprise e.g. a "subbing" layer which improves the adhesion of the coating to the support, a covering layer which protects the coating against contamination or mechanical damage, and/or a light-to-heat conversion layer which comprises an infrared light absorbing compound.

A suitable negative-working alkaline developing printing plate comprises a phenolic resin and a latent Brönsted acid which produces acid upon heating or IR radiation. These acids catalyze crosslinking of the coating in a post-exposure heating step and thus hardening of the exposed regions. Accordingly, the non-exposed regions can be washed away by a developer to reveal the hydrophilic substrate underneath. For a more detailed description of such a negative-working printing plate precursor we refer to US 6,255,042 and US 6,063,544 and to references cited in these documents. In such a negative-working lithographic printing plate precursor, the polymer of the present invention is added to the coating composition and replaces at least part of the phenolic resin.

In a positive-working lithographic printing plate precursor, the coating is capable of heat-induced solubilization, i.e. the coating is resistant to the developer and ink-accepting in the non-exposed state and becomes soluble in the developer upon exposure to heat or infrared light to such an extent that the hydrophilic surface of the support is revealed thereby.

Besides the polymer of the present invention, the coating may contain additional polymeric binders that are soluble in an aqueous alkaline developer. Preferred polymers are phenolic resins, e.g. novolac, resoles, polyvinyl phenols and carboxy-substituted polymers. Typical examples of such polymers are described in DE-A-4007428, DE-A-4027301 and DE-A-4445820.

In a preferred positive-working lithographic printing plate precursor, the coating also contains one or more dissolution inhibitors. Dissolution inhibitors are compounds which reduce the dissolution rate of the hydrophobic polymer in the aqueous alkaline developer at the non-exposed areas of the coating and wherein this reduction of the dissolution rate is destroyed by the heat generated during the exposure so that the coating readily dissolves in the developer at exposed areas. The dissolution inhibitor exhibits a substantial latitude in dissolution rate between the exposed and non-exposed areas. By preference, the dissolution inhibitor has a good dissolution rate latitude when the exposed coating areas have dissolved completely in the developer before the non-exposed areas are attacked by the developer to such an extent that the ink-accepting capability of the coating is affected. The dissolution inhibitor(s) can be added to the layer which comprises the hydrophobic polymer discussed above.

The dissolution rate of the non-exposed coating in the developer is preferably reduced by interaction between the hydrophobic polymer and the inhibitor, due to e.g. hydrogen bonding between these compounds. Suitable dissolution inhibitors are preferably organic compounds which comprise at least one aromatic group and a hydrogen bonding site, e.g. a carbonyl group, a sulfonyl group, or a nitrogen atom which may be quaternized and which may be part of a heterocyclic ring or which may be part of an amino substituent of said organic compound. Suitable dissolution inhibitors of this type have been disclosed in e.g. EP-A 825927 and 823327.

Water-repellent polymers represent an another type of suitable dissolution inhibitors. Such polymers seem to increase the developer resistance of the coating by repelling the aqueous developer from the coating. The water-repellent polymers can be added to the layer comprising the hydrophobic polymer and/or can be present in a separate layer provided on top of the layer with the hydrophobic polymer. In the latter embodiment, the water-repellent polymer forms a barrier layer which shields the coating from the developer and the solubility of the barrier layer in the developer or the penetrability of the barrier layer by the developer can be increased by exposure to heat or infrared light, as described in e.g. EP-A 864420, EP-A 950517 and WO99/21725. Preferred examples of the water-repellent polymers are polymers comprising siloxane and/or perfluoroalkyl units. In one embodiment, the coating contains such a water-repellent polymer in an amount between 0.5 and 25 mg/m², preferably between 0.5 and 15 mg/m² and most preferably between 0.5 and 10 mg/m². When the water-repellent polymer is also ink-repelling, e.g. in the case of polysiloxanes, higher amounts than 25 mg/m² can result in poor ink-acceptance of the non-exposed areas. An amount lower than 0.5 mg/m² on the other hand may lead to an unsatisfactory development resistance. The polysiloxane may be a linear, cyclic or complex cross-linked polymer or copolymer. The term polysiloxane compound shall include any compound which contains more than one siloxane group -Si(R,R')-O-, wherein R and R' are optionally substituted alkyl or aryl groups. Preferred siloxanes are phenylalkylsiloxanes and dialkylsiloxanes. The number of siloxane groups in the (co)polymer is at least 2, preferably at least 10, more preferably at least 20. It may be less than 100, preferably less than 60. In another embodiment, the water-repellent polymer is a block-copolymer or a graft-copolymer of a poly(alkylene oxide) block and a block of a polymer comprising siloxane and/or perfluoroalkyl units. A suitable copolymer comprises about 15 to 25 siloxane units and 50 to 70 alkylene oxide groups. Preferred examples include copolymers comprising phenylmethylsiloxane and/or dimethylsiloxane as well as ethylene oxide and/or propylene oxide, such as Tego Glide 410, Tego Wet 265, Tego Protect 5001 or Silikophen P50/X, all commercially available from Tego Chemie, Essen, Germany. Such a copolymer acts as a surfactant which upon coating, due to its bifunctional structure, automatically positions itself at the interface between the coating and air and thereby forms a separate top layer even when the whole coating is applied from a single coating solution. Simultaneously, such surfactants act as a spreading agent which improves the coating quality. Alternatively, the water-repellent polymer can be applied in a second solution, coated on top of the layer comprising the hydrophobic polymer. In that embodiment, it may be advantageous to use a solvent in the second coating solution that is not capable of dissolving the ingredients present in the first layer so that a highly concentrated water-repellent phase is obtained at the top of the coating.

Preferably, also one or more development accelerators are included in the coating, i.e. compounds which act as dissolution promoters because they are capable of increasing the dissolution rate of the non-exposed coating in the developer. The simultaneous application of dissolution inhibitors and accelerators allows a precise fine tuning of the dissolution behavior of the coating. Suitable dissolution accelerators are cyclic acid anhydrides, phenols or organic acids. Examples of the cyclic acid anhydride include phthalic anhydride, tetrahydrophthalic anhydride, hexahydrophthalic anhydride, tetrachlorophthalic anhydride, maleic anhydride, chloromaleic anhydride, alpha -phenylmaleic anhydride, succinic anhydride, and pyromellitic anhydride, as described in U.S. Patent No. 4,115,128. Examples of the phenols include bisphenol A, p-nitrophenol, p-ethoxyphenol, 2,4,4'-trihydroxybenzophenone, 2,3,4-trihydroxy-benzophenone, 4-hydroxybenzophenone, 4,4',4"-trihydroxy-triphenylmethane, and 4,4',3",4"-tetrahydroxy-3,5,3',5'-tetramethyltriphenyl-methane, and the like. Examples of the organic acids include sulfonic acids, sulfinic acids, alkylsulfuric acids, phosphonic acids, phosphates, and carboxylic acids, as described in, for example, JP-A Nos. 60-88,942 and 2-96,755. Specific examples of these organic acids include p-toluenesulfonic acid, dodecylbenzenesulfonic acid, p-toluenesulfinic acid, ethylsulfuric acid, phenylphosphonic acid, phenylphosphinic acid, phenyl phosphate, diphenyl phosphate, benzoic acid, isophthalic acid, adipic acid, p-toluic acid, 3,4-dimethoxybenzoic acid, phthalic acid, terephthalic acid, 4-cyclohexene-1,2-dicarboxylic acid, erucic acid, lauric acid, n-undecanoic acid, and ascorbic acid. The amount of the cyclic acid anhydride, phenol, or organic acid contained in the coating is preferably in the range of 0.05 to 20% by weight, relative to the coating as a whole.

The polymer of the present invention can be used in conventional photosensitive printing plate precursors wherein at least part of the conventional phenolic polymer is replaced by at least one of the polymers of the present invention.

According to a more preferred embodiment, the material of the present invention is image-wise exposed to infrared light, which is converted into heat by an infrared light absorbing agent, which may be a dye or pigment having an absorption maximum in the infrared wavelength range. The concentration of the sensitizing dye or pigment in the coating is typically between 0.25 and 10.0 wt.%, more preferably between 0.5 and 7.5 wt.% relative to the coating as a whole. Preferred IR-absorbing compounds are dyes such as cyanine or merocyanine dyes or pigments such as carbon black. A suitable compound is the following infrared dye :

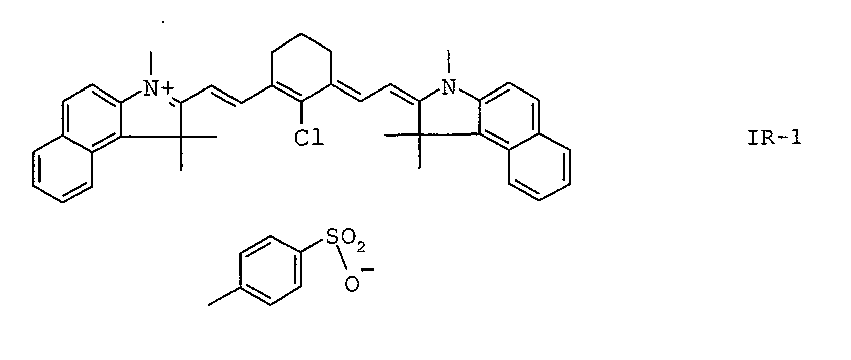

The coating may further contain an organic dye which absorbs visible light so that a perceptible image is obtained upon image-wise exposure and subsequent development. Such a dye is often called contrast dye or indicator dye. Preferably, the dye has a blue color and an absorption maximum in the wavelength range between 600nm and 750 nm. Although the dye absorbs visible light, it preferably does not sensitize the printing plate precursor, i.e. the coating does not become more soluble in the developer upon exposure to visible light. Suitable examples of such a contrast dye are the quaternized triarylmethane dyes. Another suitable compound is the following dye:

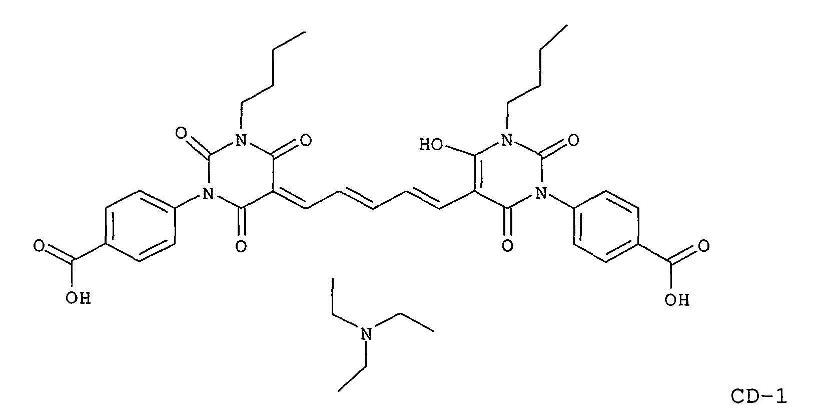

The infrared light absorbing compound and the contrast dye may be present in the layer comprising the hydrophobic polymer, and/or in the barrier layer discussed above and/or in an optional other layer. According to a highly preferred embodiment, the infrared light absorbing compound is concentrated in or near the barrier layer, e.g. in an intermediate layer between the layer comprising the hydrophobic polymer and the barrier layer.

The printing plate precursor of the present invention can be exposed to infrared light with LEDs or a laser. Preferably, a laser emitting near infrared light having a wavelength in the range from about 750 to about 1500 nm is used, such as a semiconductor laser diode, a Nd:YAG or a Nd:YLF laser. The required laser power depends on the sensitivity of the image-recording layer, the pixel dwell time of the laser beam, which is determined by the spot diameter (typical value of modern plate-setters at 1/e² of maximum intensity : 10-25 pm), the scan speed and the resolution of the exposure apparatus (i.e. the number of addressable pixels per unit of linear distance, often expressed in dots per inch or dpi; typical value : 1000-4000 dpi).

Two types of laser-exposure apparatuses are commonly used: internal (ITD) and external drum (XTD) plate-setters. ITD plate-setters for thermal plates are typically characterized by a very high scan speed up to 1500 m/sec and may require a laser power of several Watts. The Agfa Galileo T is a typical example of a plate-setter using the ITD-technology. XTD plate-setters operate at a lower scan speed typically from 0.1 m/sec to 10 m/sec and have a typical laser-output-power per beam from 20 mW up to 500 mW. The Creo Trendsetter plate-setter family and the Agfa Excalibur plate-setter family both make use of the XTD-technology.

The known plate-setters can be used as an off-press exposure apparatus, which offers the benefit of reduced press down-time. XTD plate-setter configurations can also be used for on-press exposure, offering the benefit of immediate registration in a multi-color press. More technical details of on-press exposure apparatuses are described in e.g. US 5,174,205 and US 5,163,368.

In the development step, the non-image areas of the coating can be removed by immersion in an aqueous alkaline developer, which may be combined with mechanical rubbing, e.g. by a rotating brush. The developer preferably has a pH above 10, more preferably above 12. The development step may be followed by a rinsing step, a gumming , step, a drying step and/or a post-baking step.

The printing plate thus obtained can be used for conventional, so-called wet offset printing, in which ink and an aqueous dampening liquid is supplied to the plate. Another suitable printing method uses so-called single-fluid ink without a dampening liquid. Single-fluid ink consists of an ink phase, also called the hydrophobic or oleophilic phase, and a polar phase which replaces the aqueous dampening liquid that is used in conventional wet offset printing. Suitable examples of single-fluid inks have been described in US 4,045,232; US 4,981,517 and US 6,140,392. In a most preferred embodiment, the single-fluid ink comprises an ink phase and a polyol phase as described in WO 00/32705.

### EXAMPLES

List of substitution reagentia used in the preparation of modified polymers:
CMR-01: 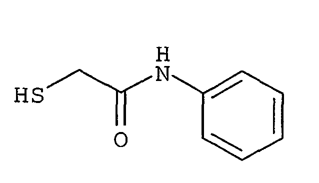
CMR-02: 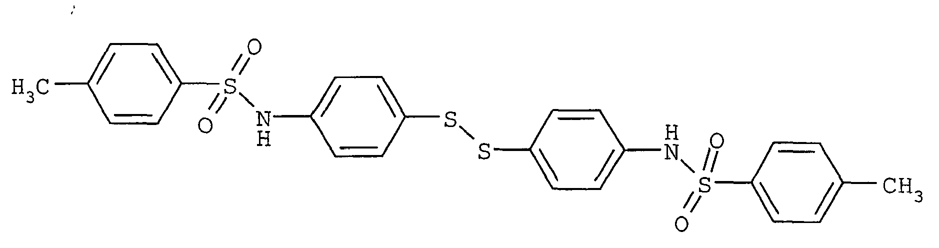
CMR-03: 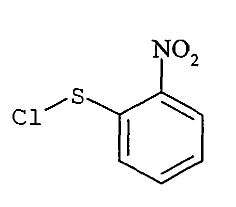
CMR-04: 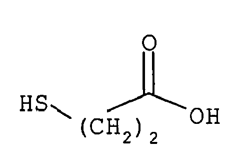
Sulfolane: tetrahydrothiophene 1,1-dioxide

### Preparation of polymer MP-01:

### - Modifying solution:

To a mixture of 8.9 g MR-01 and 500 ml CH₂Cl₂, stirred at room temperature, 4.1 ml SO₂Cl₂ was added and the mixture was brought to 40°C for 30 minutes after which the mixture was cooled to room temperature.

### - Phenolic polymer solution:

24.5 g of solid polymer, obtained by precipitation of 61.25 g of POL-01 solution (40 % by weight in Dowanol PM) in a mixture of water/methanol (volume ratio 10:1) and subsequent drying at 40°C, was added to a mixture of 250 ml CH₂Cl₂ and 25 ml sulfolane at 40°C. After the polymer was dissolved, the mixture was cooled to room temperature.

Then the above prepared modifying solution was added to the phenolic polymer solution over a 45 minute period while continuously stirring. After addition the reaction mixture was stirred for another 60 minutes under reflux conditions. Then the reaction mixture was cooled to room temperature and 750 ml acetone was added. Then, the reaction mixture was concentrated by evaporation until an oil was obtained. This oil was then added to 2 liters of ice-water over a 30 minute period while continuously stirring. The polymer precipitated from the aqueous medium and was isolated by filtration. The desired product was finally obtained by washing with water and subsequent drying at 45°C.

### Preparation of polymer MP-02:

The preparation of polymer MP-02 was carried out in the same way as that of polymer MP-01 with the exception that in the preparation of the modifying solution 14.8 g MR-02, 200 ml CH₂Cl₂ and 4.1 ml SO₂Cl₂ and in the preparation of the phenolic polymer solution 24.5 g solid polymer and a mixture of 100 ml CH₂Cl₂ and 100 ml sulfolane were used instead of the products and the quantities given in the preparation of polymer MP-01.

### Preparation of polymer MP-05:

The preparation of polymer MP-05 was carried out in the same way as that of polymer MP-01 with the exception that in the preparation of the modifying solution 10.5 g MR-05, 150 ml CH₂Cl₂ and 6.2 ml SO₂Cl₂ and in the preparation of the phenolic polymer solution 36.8 g of solid polymer, obtained by precipitation of 92 g of POL-01 solution, and a mixture of 75 ml CH₂Cl₂ and 100 ml sulfolane were used instead of the products and the quantities given in the preparation of polymer MP-01.

### Preparation of polymer MP-06:

The preparation of polymer MP-06 was carried out in the same way as that of polymer MP-01 with the exception that in the preparation of the modifying solution 12.5 g CMR-01, 150 ml CH₂Cl₂ and 6.2 ml SO₂Cl₂ and in the preparation of the phenolic polymer solution 36.8 g solid polymer and a mixture of 100 ml CH₂Cl₂ and 100 ml sulfolane were used instead of the products and the quantities given in the preparation of polymer MP-01.

### Preparation of polymer MP-07:

The preparation of polymer MP-07 was carried out in the same way as that of polymer MP-01 with the exception that in the preparation of the modifying solution 14 g CMR-02, 100 ml CH₂Cl₂ and 2.1 ml SO₂Cl₂ and in the preparation of the phenolic polymer solution 24.5 g solid polymer and a mixture of 50 ml CH₂Cl₂, 100 ml sulfolane and 6.8 ml tetramethylguanidine were used instead of the products and the quantities given in the preparation of polymer MP-01.

### Preparation of polymer MP-08:

The preparation of polymer MP-08 was carried out in the same way as that of polymer MP-01 with the exception that in the preparation of the modifying solution 14.2 g CMR-03 and 100 ml CH₂Cl₂ and no addition of SO₂Cl₂ and in the preparation of the phenolic polymer solution 36.8 g solid polymer and a mixture of 100 ml CH₂Cl₂ and 50 ml sulfolane were used instead of the products and the quantities given in the preparation of polymer MP-01.

### Preparation of polymer MP-09:

The preparation of polymer MP-09 was carried out in the same way as that of polymer MP-01 with the exception that in the preparation of the modifying solution 7.95 g CMR-04, 150 ml CH₂Cl₂ and 6.2 ml SO₂Cl₂ and in the preparation of the phenolic polymer solution 36.8 g solid polymer and a mixture of 75 ml CH₂Cl₂ and 75 ml sulfolane were used instead of the products and the quantities given in the preparation of polymer MP-01.

### Test 1:

### Preparation of the coating:

A coating solution was prepared by mixing the following ingredients:
- 86.55 g Dowanol PM
- 464.64 g methyl ethyl ketone
- 101.28 g of a solution of the infrared dye IR-1 in a concentration of 2 % by weight in Dowanol PM
- 144.70 g of a solution of the contrast dye CD-1 in a concentration of 1 % by weight in Dowanol PM
- 159.14 g of a solution of Tego Glide 410 in a concentration of 1 % by weight in Dowanol PM
- 159.14 g of a solution of a phenolic polymer, as listed in Table 1, in a concentration of 40 % by weight in Dowanol PM
- 3.18 g of 3,4,5-trimethoxycinnamic acid.

The coating solution was coated on an electrochemically grained and anodized aluminum substrate at a wet thickness of 20µm. The coating was dried for 1 minute at 130°C.

For measuring the chemical resistance 2 different solutions were selected:
- Test solution 1: solution of isopropanol in a concentration of 50 % by weight in water,
- Test solution 2: EMERALD PREMIUM MXEH, commercially available from ANCHOR.

The chemical resistance was tested by contacting a droplet of 40µl of each test solution on different spots of the coating. After 3 minutes, the droplet was removed from the coating with a cotton pad.

The attack on the coating due to each test solution was rated by visual inspection as follows:
- 0: no attack,
- 1: changed gloss of the coating's surface,
- 2: small attack of the coating (thickness is decreased),
- 3: heavy attack of the coating,
- 4: completely dissolved coating.

The higher the rating, the less is the chemical resistance of the coating. The results for the 2 test solutions on each coating are summarised in Table 1. The table contains also information about the type of the phenolic polymer used in the modifying reaction, the type of modifying reagens and the degree of modification (in mol %) and the MP-number of the prepared polymer.

**Table 1:**

| Example number | Type Phenolic Polymer | Type reagens | Degree modif. (mol%) | Prep. Polym. MP-nr. | TEST 1 Test solution 1 | TEST 1 Test solution 2 |
|---|---|---|---|---|---|---|
| Comparative example 1 | POL-01 | - | - | - | 4 | 4 |
| Example 1 | POL-01 | MR-01 | 25 | MP-01 | 0 | 1 |
| Example 2 | POL-01 | MR-02 | 25 | MP-02 | 2 | 2 |
| Example 5 | POL-01 | MR-05 | 25 | MP-05 | 0 | 0 |
| Comparative example 2 | POL-01 | CMR-01 | 25 | MP-06 | 4 | 3 |
| Comparative example 3 | POL-01 | CMR-02 | 25 | MP-07 | 4 | 3 |
| Comparative example 4 | POL-01 | CMR-03 | 25 | MP-08 | 4 | 3 |
| Comparative example 5 | POL-01 | CMR-04 | 25 | MP-09 | 4 | 3 |

Table 1 demonstrates that the polymers, modified according to the present invention, give rise to a significant increase of the chemical resistance of the coating compared with unmodified polymer and compared with polymers, modified for the same degree with a modifying reagens which does not contain a heterocyclic group.

## Claims

1. A polymer comprising a phenolic monomeric unit wherein the phenyl group of the phenolic monomeric unit is substituted by a group having the structure -S-(L)ₖ-Q wherein S is covalently bound to a carbon atom of the phenyl group, wherein L is a linking group, k is 0 or 1 and Q comprises a heterocyclic group.

2. A polymer according to claim 1 wherein said heterocyclic group is aromatic.

3. A polymer according to claim 1 or 2 wherein said heterocyclic group contains at least one nitrogen atom in the ring of the heterocyclic group.

4. A polymer according to any of the preceding claims wherein said heterocyclic group has a 5- or 6-membered ring structure, optionally annelated with another ring system.

5. A polymer according to any of the preceding claims wherein the heterocyclic group is selected from an optionally substituted tetrazole, triazole, thiadiazole, oxadiazole, imidazole, benzimidazole, thiazole, benzthiazole, oxazole, benzoxazole, pyrazole, pyrrole, pyrimidine, pyrasine, pyridasine, triazine or pyridine group.

6. A polymer according to claim 1 wherein the -S-(L)ₖ-Q comprises the following formula 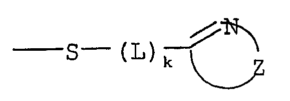 wherein Z represents the necessary atoms to form a 5- or 6-membered heterocyclic aromatic group, optionally annelated with another ring system.

7. A polymer according to claim 6 wherein the -S-(L)ₖ-Q comprises the following formula 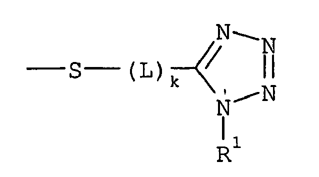 wherein R¹ is selected from hydrogen or an optionally substituted alkyl, alkenyl, alkynyl, cycloalkyl, heterocyclic, aryl, heteroaryl, aralkyl or heteroaralkyl group.

8. A polymer according to claim 6 wherein the -S-(L)ₖ-Q comprises the following formula 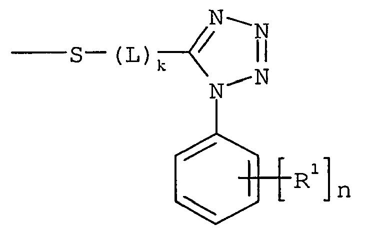 wherein n is 0, 1, 2, 3, 4 or 5,
wherein each R¹ is independently selected from hydrogen, an optionally substituted alkyl, alkenyl, alkynyl, cycloalkyl, heterocyclic, aryl, heteroaryl, aralkyl or heteroaralkyl group, halogen, -SO₂-NH-R², -NH-SO₂-R⁵, -CO-NR²-R³, -NR²-CO-R⁵, -NR²-CO-NR³-R⁴, -NR²-CS-NR³-R⁴, -NR²-CO-O-R³, -O-CO-NR²-R³, -O-CO-R⁵, -CO-O-R², -CO-R², -SO₃-R², -O-SO₂-R⁵, -SO₂-R², -SO-R⁵, -P(=O)(-O-R²)(-O-R³), -O-P(=O)(-O-R²)(-O-R³), -NR²-R³, -O-R², -S-R², -CN, -NO₂ or -M-R², wherein M represents a divalent linking group containing 1 to 8 carbon atoms,
wherein R² to R⁴ are independently selected from hydrogen or an optionally substituted alkyl, alkenyl, alkynyl, cycloalkyl, heterocyclic, aryl, heteroaryl, aralkyl or heteroaralkyl group,
wherein R⁵ is an optionally substituted alkyl, alkenyl, alkynyl, cycloalkyl, heterocyclic, aryl, heteroaryl, aralkyl or heteroaralkyl group,
or wherein at least two groups selected from each R¹, R², R³, R⁴ and R⁵ together represent the necessary atoms to form a cyclic structure.

9. A polymer according to claim 6 wherein the -S-(L)ₖ-Q comprises the following formula 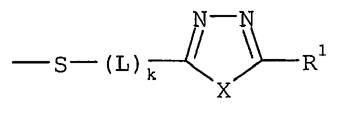 wherein X is O, S or NR³,
wherein R¹ is selected from hydrogen, an optionally substituted alkyl, alkenyl, alkynyl, cycloalkyl, heterocyclic, aryl, heteroaryl, aralkyl or heteroaralkyl group, halogen or -L¹-R²,
wherein L¹ is a linking group,
wherein R² is selected from hydrogen, an optionally substituted alkyl, alkenyl, alkynyl, cycloalkyl, heterocyclic, aryl, heteroaryl, aralkyl or heteroaralkyl group, halogen or -CN,
wherein R³ is selected from hydrogen or an optionally substituted alkyl, alkenyl, alkynyl, cycloalkyl, heterocyclic, aryl, heteroaryl, aralkyl or heteroaralkyl group,
or wherein at least two groups selected from R¹, R² and R³ represent the necessary atoms to form a cyclic structure.

10. A polymer according to claim 6 wherein the -S-(L)ₖ-Q comprises the following formula 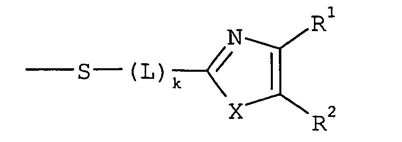 wherein X is O, S or NR⁴,
wherein R¹ and R² are independently selected from hydrogen, an optionally substituted alkyl, alkenyl, alkynyl, cycloalkyl, heterocyclic, aryl, heteroaryl, aralkyl or heteroaralkyl group, halogen or -L¹-R³,
wherein L¹ is a linking group,
wherein R³ is selected from hydrogen, an optionally substituted alkyl, alkenyl, alkynyl, cycloalkyl, heterocyclic, aryl, heteroaryl, aralkyl or heteroaralkyl group, halogen or -CN,
wherein R⁴ is selected from hydrogen or an optionally substituted alkyl, alkenyl, alkynyl, cycloalkyl, heterocyclic, aryl, heteroaryl, aralkyl or heteroaralkyl group,
or wherein at least two groups selected from R¹, R², R³ and R⁴ together represent the necessary atoms to form a cyclic structure.

11. A polymer according to claim 6 wherein the -S-(L)ₖ-Q comprises the following formula 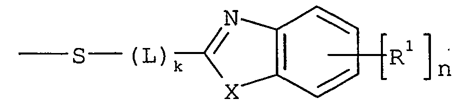 wherein n is 0, 1, 2, 3 or 4,
wherein X is O, S or NR⁵,
wherein each R¹ is independently selected from hydrogen, an optionally substituted alkyl, alkenyl, alkynyl, cycloalkyl, heterocyclic, aryl, heteroaryl, aralkyl or heteroaralkyl group, halogen, -SO₂-NH-R², -NH-SO₂-R⁶, -CO-NR²-R³, -NR²-CO-R⁶, -NR²-CO-NR³-R⁴, -NR²-CS-NR³-R⁴, -NR²-CO-O-R³, -O-CO-NR²-R³, -O-CO-R⁶, -CO-O-R², -CO-R², -SO₃-R², -O-SO₂-R⁶, -SO₂-R², -SO-R⁶, -P(=O)(-O-R²)(-O-R³), -O-P(=O)(-O-R²)(-O-R³), -NR²-R³, -O-R², -S-R², -CN, -NO₂ or -M-R², wherein M represents a divalent linking group containing 1 to 8 carbon atoms,
wherein R² to R⁵ are independently selected from hydrogen or an optionally substituted alkyl, alkenyl, alkynyl, cycloalkyl, heterocyclic, aryl, heteroaryl, aralkyl or heteroaralkyl group,
wherein R⁶ is an optionally substituted alkyl, alkenyl, alkynyl, cycloalkyl, heterocyclic, aryl, heteroaryl, aralkyl or heteroaralkyl group,
or wherein at least two groups selected from each R¹, R², R³, R⁴, R⁵ and R⁶ represent the necessary atoms to form a cyclic structure.

12. A polymer according to claim 6 wherein the -S-(L)ₖ-Q comprises the following formula 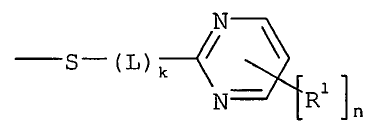 wherein n is 0, 1, 2 or 3,
wherein each R¹ is independently selected from hydrogen, an optionally substituted alkyl, alkenyl, alkynyl, cycloalkyl, heterocyclic, aryl, heteroaryl, aralkyl or heteroaralkyl group, halogen, -SO₂-NH-R², -NH-SO₂-R⁵, -CO-NR²-R³, -NR²-CO-R⁵, -NR²-CO-NR³-R⁴, -NR²-CS-NR³-R⁴, -NR²-CO-O-R³, -O-CO-NR²-R³, -O-CO-R⁵, -CO-O-R², CO-R², -SO₃-R², -O-SO₂-R⁵, -SO₂-R², -SO-R⁵, -P(=O)(-O-R²)(-O-R³), -O-P(=O)(-O-R²)(-O-R³), -NR²-R³, -O-R², -S-R², -CN, -NO₂ or -M-R², wherein M represents a divalent linking group containing 1 to 8 carbon atoms,
wherein R² to R⁴ are independently selected from hydrogen or an optionally substituted alkyl, alkenyl, alkynyl, cycloalkyl, heterocyclic, aryl, heteroaryl, aralkyl or heteroaralkyl group,
wherein R⁵ is an optionally substituted alkyl, alkenyl, alkynyl, cycloalkyl, heterocyclic, aryl, heteroaryl, aralkyl or heteroaralkyl group,
or wherein at least two groups selected from each R¹, R², R³, R⁴ and R⁵ together represent the necessary atoms to form a cyclic structure.

13. A polymer according to claim 6 wherein the -S-(L)ₖ-Q comprises one of the following formula:

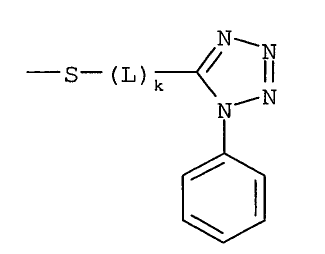

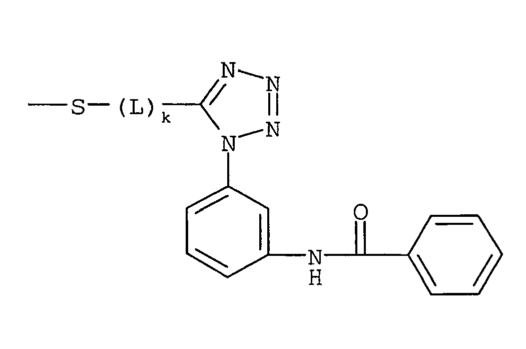

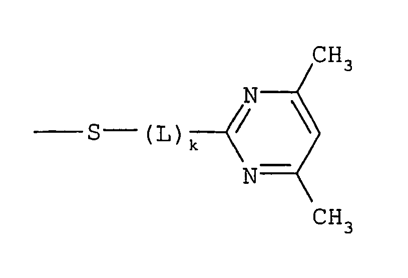

14. A polymer according to any of the preceding claims, wherein said polymer comprising a phenolic monomeric unit is a novolac, resol or polyvinylphenol.

15. A heat-sensitive lithographic printing plate precursor comprising a support having a hydrophilic surface and an oleophilic coating, provided on the hydrophilic surface, said coating comprising an infrared light absorbing agent and a polymer according to any of the preceding claims.

16. A lithographic printing plate precursor according to claim 15, wherein said coating further comprises a dissolution inhibitor and wherein said precursor is a positive working lithographic printing plate precursor.

17. A lithographic printing plate precursor according to claim 16, wherein said dissolution inhibitor is selected from
- an organic compound which comprises at least one aromatic group and a hydrogen bonding site, and/or
- a polymer or surfactant comprising siloxane or perfluoroalkyl units.

18. Use of a polymer, according to any of the claims 1 to 14, in a coating of a positive working heat-sensitive lithographic printing plate precursor, further comprising
- an infrared absorbing agent and
- a dissolution inhibitor,
for increasing the chemical resistance of the coating against printing liquids and press chemicals.

19. A lithographic printing plate precursor according to claim 15, wherein said coating further comprising a latent Brönsted acid and an acid-crosslinkable compound and wherein said precursor is a negative working lithographic printing plate precusor.

20. Use of a polymer, according to any of the claims 1 to 14, in a coating of a negative working heat-sensitive lithographic printing plate precursor, further comprising
- an infrared absorbing agent,
- a latent Brönsted acid and
- an acid-crosslinkable compound,
for increasing the chemical resistance of the coating against printing liquids and press chemicals.

## Patentansprüche

1. Ein Polymer mit einer Phenolmonomereinheit, wobei die Phenylgruppe der Phenolmonomereinheit durch eine Gruppe entsprechend der Struktur -S-(L)ₖ-Q, in der S kovalent an ein Kohlenstoffatom der Phenylgruppe gebunden ist, L eine Verbindungsgruppe ist, k 0 oder 1 bedeutet und Q eine heterocyclische Gruppe bedeutet, substituiert ist.

2. Polymer nach Anspruch 1, **dadurch gekennzeichnet, dass** die heterocyclische Gruppe eine aromatische Gruppe ist.

3. Polymer nach Anspruch 1 oder 2, **dadurch gekennzeichnet, dass** die heterocyclische Gruppe zumindest ein Stickstoffatom im Ring der heterocyclischen Gruppe enthält.

4. Polymer nach einem der vorstehenden Ansprüche, **dadurch gekennzeichnet, dass** die heterocyclische Gruppe eine fünfgliedrige oder sechsgliedrige, gegebenenfalls mit einem anderen Ringsystem anellierte Ringstruktur aufweist.

5. Polymer nach einem der vorstehenden Ansprüche, **dadurch gekennzeichnet, dass** die heterocyclische Gruppe eine gegebenenfalls substituierte Tetrazolgruppe, Triazolgruppe, Thiadiazolgruppe, Oxadiazolgruppe, Imidazolgruppe, Benzimidazolgruppe, Thiazolgruppe, Benzthiazolgruppe, Oxazolgruppe, Benzoxazolgruppe, Pyrazolgruppe, Pyrrolgruppe, Pyrimidingruppe, Pyrasingruppe, Pyridasingruppe, Triazingruppe oder Pyridingruppe ist.

6. Polymer nach Anspruch 1, **dadurch gekennzeichnet, dass** die -S-(L)ₖ-Q-Gruppe folgender Formel entspricht : 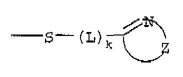 in der Z die zur Bildung einer fünfgliedrigen oder sechsgliedrigen, heterocyclischen, aromatischen, gegebenenfalls mit einem anderen Ringsystem anellierten Gruppe benötigten Atome bedeutet.

7. Polymer nach Anspruch 6, **dadurch gekennzeichnet, dass** die -S-(L)ₖ-Q-Gruppe folgender Formel entspricht : 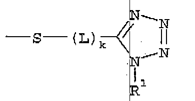 in der R¹ ein Wasserstoffatom oder eine gegebenenfalls substituierte Alkylgruppe, Alkenylgruppe, Alkynylgruppe, Cycloalkylgruppe, heterocyclische Gruppe, Arylgruppe, Heteroarylgruppe, Aralkylgruppe oder Heteroaralkylgruppe bedeutet.

8. Polymer nach Anspruch 6, **dadurch gekennzeichnet, dass** die -S-(L)ₖ-Q-Gruppe folgender Formel entspricht : 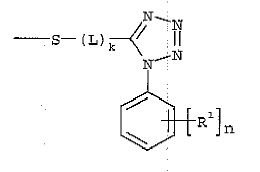 in der :
n 0, 1, 2, 3, 4 oder 5 bedeutet,
R¹ ein Wasserstoffatom, eine gegebenenfalls substituierte Alkylgruppe, Alkenylgruppe, Alkynylgruppe, Cycloalkylgruppe, heterocyclische Gruppe, Arylgruppe, Heteroarylgruppe, Aralkylgruppe oder Heteroaralkylgruppe, ein Halogenatom, -SO₂-NH-R², -NH-SO₂-R⁵, -CO-NR²-R³, -NR²-CO-R⁵, -NR²-CO-NR³-R⁴, -NR²-CS-NR³-R⁴, -NR²-CO-O-R³, -O-CO-NR²-R³, -O-CO-R⁵, -CO-O-R², -CO-R², -SO₃-R², -O-SO₂-R⁵, -SO₂-R², -SO-R⁵, -P(=O)(-O-R²)(-O-R³), -O-P(=O)(-O-R²)(-O-R³), -NR²-R³, -O-R², -S-R², -CN, -NO₂ oder -M-R², in der M eine zweiwertige Verbindungsgruppe mit 1 bis 8 Kohlenstoffatomen bedeutet, darstellt,
wobei R² bis R⁴ unabhängig voneinander jeweils ein Wasserstoffatom oder eine gegebenenfalls substituierte Alkylgruppe, Alkenylgruppe, Alkynylgruppe, Cycloalkylgruppe, heterocyclische Gruppe, Arylgruppe, Aralkylgruppe oder Heteroaralkylgruppe bedeuten,
wobei R⁵ eine gegebenenfalls substituierte Alkylgruppe, Alkenylgruppe, Alkynylgruppe, Cycloalkylgruppe, heterocyclische Gruppe, Arylgruppe, Heteroarylgruppe, Aralkylgruppe oder kieteroaralkylgruppe bedeutet,
oder wobei zumindest zwei Gruppen aus der Reihe R¹, R², R³, R⁴ und R⁵ zusammen die zur Bildung einer cyclischen Struktur benötigten Atome bedeuten.

9. Polymer nach Anspruch 6, **dadurch gekennzeichnet, dass** die -S-(L)ₖ-Q-Gruppe folgender Formel entspricht 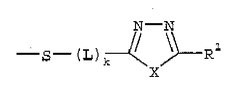 in der :
X O, S oder NR³ bedeutet,
R¹ ein Wasserstoffatom, eine gegebenenfalls substituierte Alkylgruppe, Alkenylgruppe, Alkynylgruppe, Cycloalkylgruppe, heterocyclische Gruppe, Arylgruppe, Heteroarylgruppe, Aralkylgruppe oder Heteroaralkylgruppe, ein Halogenatom oder-L¹-R² darstellt,
wobei L¹ eine verbindungsgruppe bedeutet,
R² ein Wasserstoffatom, eine gegebenenfalls substituierte Alkylgruppe, Alkenylgruppe, Alkynylgruppe, cycloalkylgruppe, heterocyclische Gruppe, Arylgruppe, Heteroarylgruppe, Aralkylgruppe oder Heteroaralkylgruppe, ein Halogenatom oder -CN bedeutet,
R³ ein Wasserstoffatom oder eine gegebenenfalls substituierte Alkylgruppe, Alkenylgruppe, Alkynylgruppe, Cycloalkylgruppe, heterocyclische Gruppe, Arylgruppe, Heteroarylgruppe, Aralkylgruppe oder Heteroaralkylgruppe bedeutet,
oder wobei zumindest zwei Gruppen aus der Reihe R¹, R² und R³ zusammen die zur Bildung einer cyclischen Struktur benötigten Atome bedeuten.

10. Polymer nach Anspruch 6, **dadurch gekennzeichnet, dass** die -S-(L)ₖ-Q-Gruppe folgender Formel entspricht : 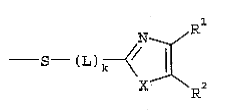 in der :
X O, S oder NR⁴ bedeutet,
R¹ und R² unabhängig voneinander jeweils ein Wasserstoffatom, eine gegebenenfalls substituierte Alkylgruppe, Alkenylgruppe, Alkynylgruppe, Cycloalkylgruppe, heterocyclische Gruppe, Arylgruppe, Heteroarylgruppe, Aralkylgruppe oder Heteroaralkylgruppe, ein Halogenatom oder -L¹-R³ darstellen,
wobei L¹ eine Verbindungsgruppe bedeutet,
R³ ein Wasserstoffatom, eine gegebenenfalls substituierte Alkylgruppe, Alkenylgruppe, Alkynylgruppe, Cycloalkylgruppe, heterocyclische Gruppe, Arylgruppe, Heteroarylgruppe, Aralkylgruppe oder Heteroaralkylgruppe, ein Halogenatom oder -CN bedeutet,
_{R}⁴ ein Wasserstoffatom oder eine gegebenenfalls substituierte Alkylgruppe, Alkenylgruppe, Alkynylgruppe, Cycloalkylgruppe, heterocyclische Gruppe, Arylgruppe, Heteroarylgruppe, Aralkylgruppe oder Heteroaralkylgruppe bedeutet,
oder wobei zumindest zwei Gruppen aus der Reihe R¹, R², R³ und R⁴ zusammen die zur Bildung einer cyclischen Struktur benötigten Atome bedeuten.

11. Polymer nach Anspruch 6, **dadurch gekennzeichnet, dass** die -S-(L)ₖ-Q-Gruppe folgender Formel entspricht : 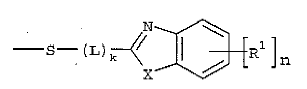 in der :
n 0, 1, 2, 3 oder 4 bedeutet,
X O, S oder NR⁵ bedeutet,
R¹ ein Wasserstoffatom, eine gegebenenfalls substituierte Alkylgruppe, Alkenylgruppe, Alkynylgruppe, Cycloalkylgruppe, heterocyclische Gruppe, Arylgruppe, Heteroarylgruppe, Aralkylgruppe oder Heteroaralkylgruppe, ein Halogenatom, -SO₂-NH-R², -NH-SO₂-R⁶, -CO-NR²-R³, -NR²-CO-R⁶, -NR²-CO-NR³-R⁴, -NR²-CS-NR³-R⁴, -NR²-CO-O-R³, -O-CO-NR²-R³, -O-CO-R⁶, -CO-O-R², -CO-R², -SO₃-R², -O-SO₂-R⁶, -SO₂-R², -SO-R⁶, -P(=O)(-O-R²)(-O-R³), -O-P(=O)(-O-R²)(-O-R³), -NR²-R³, -O-R², -S-R², -CN, -NO₂ oder -M-R², in der M eine zweiwertige Verbindungsgruppe mit 1 bis 8 Kohlenstoffatomen bedeutet, darstellt,
wobei R² bis R⁵ unabhängig voneinander jeweils ein Wasserstoffatom oder eine gegebenenfalls substituierte Alkylgruppe, Alkenylgruppe, Alkynylgruppe, Cycloalkylgruppe, heterocyclische Gruppe, Arylgruppe, Heteroarylgruppe, Aralkylgruppe oder Heteroaralkylgruppe bedeuten,
wobei R⁶ eine gegebenenfalls substituierte Alkylgruppe, Alkenylgruppe, Alkynylgruppe, Cycloalkylgruppe, heterocyclische Gruppe, Arylgruppe, Heteroarylgruppe, Aralkylgruppe oder Heteroaralkylgruppe bedeutet,
oder wobei zumindest zwei Gruppen aus der Reihe R¹, R², R³, R⁴, R⁵ und R⁶ zusammen die zur Bildung einer cyclischen Struktur benötigten Atome bedeuten.

12. Polymer nach Anspruch 6, **dadurch gekennzeichnet, dass** die -S-(L)ₖ-Q-Gruppe folgender Formel entspricht: 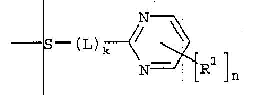 in der :
n 0, 1, 2 oder 3 bedeutet,
R¹ ein Wasserstoffatom, eine gegebenenfalls substituierte Alkylgruppe, Alkenylgruppe, Alkynylgruppe, Cycloalkylgruppe, heterocyclische Gruppe, Arylgruppe, Heteroarylgruppe, Aralkylgruppe oder Heteroaralkylgruppe, ein Halogenatom, -SO₂-NH-R², -NH-SO₂-R⁵, -CO-NR²-R³, -NR²-CO²-R⁵, -NR²-CO-NR³-R⁴, -NR²-CS-NR³-R⁴, -NR²-CO-R³, -O-CO-NR²-R³, -O-CO-R⁵, -CO-O-R², -CO-R², -SO₃-R², -O-SO₂-R⁵, -SO₂-R², -SO-R⁵, -P(=O)(-O-R²)(-O-R³), -O-P(=O)(-O-R²)(-O-R³), -NR²-R³, -O-R², -S-R², -CN, -NO₂ oder -M-R², in der M eine zweiwertige Verbindungsgruppe mit 1 bis 8 Kohlenstoffatomen bedeutet, darstellt,
wobei R² bis R⁴ unabhängig voneinander jeweils ein Wasserstoffatom oder eine gegebenenfalls substituierte Alkylgruppe, Alkenylgruppe, Alkynylgruppe, Cycloalkylgruppe, heterocyclische Gruppe, Arylgruppe, Heteroarylgruppe, Aralkylgruppe oder Heteroaralkylgruppe bedeuten,
wobei R⁵ eine gegebenenfalls substituierte Alkylgruppe, Alkenylgruppe, Alkynylgruppe, Cycloalkylgruppe, heterocyclische Gruppe, Arylgruppe, Heteroarylgruppe, Aralkylgruppe oder Heteroaralkylgruppe bedeutet,
oder wobei zumindest zwei Gruppen aus der Reihe R¹, R², R³, R⁴ und R⁵ zusammen die zur Bildung einer cyclischen Struktur benötigten Atome bedeuten.

13. Polymer nach Anspruch 6, **dadurch gekennzeichnet, dass** die -S-(L)ₖ-Q-Gruppe einer der folgenden Formeln entspricht :

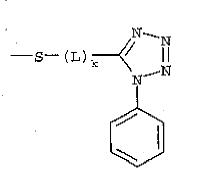

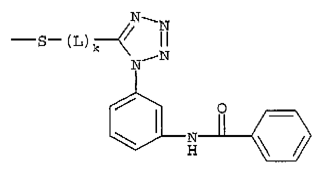

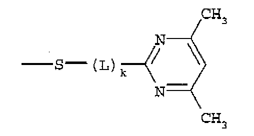

14. Polymer nach einem der vorstehenden Ansprüche, **dadurch gekennzeichnet, dass** das Polymer mit einer Phenolmonomereinheit ein Novolak, Resol oder Polyvinylphenol ist.

15. Eine wärmeempfindliche lithografische Druckplattenvorstufe mit einem Träger, der eine hydrophile, mit einer oleophilen Beschichtung beschichtete Oberfläche aufweist, wobei die Beschichtung einen IR-Absorber und ein Polymer nach einem der vorstehenden Ansprüche enthält.

16. Lithografische Druckplattenvorstufe nach Anspruch 15, **dadurch gekennzeichnet, dass** die Beschichtung ferner einen Lösungshemmer enthält und die Vorstufe eine positivarbeitende lithografische Druckplattenvorstufe ist.

17. Lithografische Druckplattenvorstufe nach Anspruch 16, **dadurch gekennzeichnet, dass** als Lösungshemmer:
- eine organische Verbindung, die zumindest eine aromatische Gruppe und eine Wasserstoffbindungsstelle enthält, und/oder
- ein Polymer oder Tensid mit siloxan- oder Perfluoralkyleinheiten verwendet wird.

18. Verwendung eines Polymers nach einem der Ansprüche 1 bis 14 in einer Beschichtung einer positivarbeitenden wärmeempfindlichen lithografischen Druckplattenvorstufe, wobei die Beschichtung ferner :
- ein Infrarotlicht absorbierendes Mittel und
- einen Lösungshemmer enthält,
um die chemische Beständigkeit der Beschichtung gegen Druckflüssigkeiten und Druckpressenchemikalien zu steigern.

19. Lithografische Druckplattenvorstufe nach Anspruch 15, **dadurch gekennzeichnet, dass** die Beschichtung ferner eine latente Brönsted-Säure und eine säurevernetzbare Verbindung enthält und die Vorstufe eine negativarbeitende lithografische Druckplattenvorstufe ist.

20. Verwendung eines Polymers nach einem der Ansprüche 1 bis 14 in einer Beschichtung einer negativarbeitenden wärmeempfindlichen lithografischen Druckplattenvorstufe, wobei die Beschichtung ferner :
- ein Infrarotlicht absorbierendes Mittel,
- eine latente Brönsted-Säure und
- eine saurevernetzbare Verbindung enthält,
um die chemische Beständigkeit der Beschichtung gegen Druckflüssigkeiten und Druckpressenchemikalien zu steigern.

## Revendications

1. Polymère comprenant une unité monomère phénolique dans laquelle le groupe phényle de l'unité monomère phénolique porte, à titre de substituant, un groupe possédant la structure -S-(L)ₖ-Q dans laquelle S est lié de manière covalente à un atome de carbone du groupe phényle, dans laquelle L représente un groupe de liaison, k est égal à 0 ou 1 et Q comprend un groupe hétérocyclique.

2. Polymère selon la revendication 1, dans lequel ledit groupe hétérocyclique est aromatique.

3. Polymère selon la revendication 1 ou 2, dans lequel ledit groupe hétérocyclique contient au moins un atome d'azote dans le noyau du groupe hétérocyclique.

4. Polymère selon l'une quelconque des revendications précédentes, dans lequel ledit groupe hétérocyclique possède une structure de noyau pentagonal ou hexagonal, le cas échéant condensé à un autre système cyclique.

5. Polymère selon l'une quelconque des revendications précédentes, dans lequel ledit groupe hétérocyclique est choisi parmi le groupe comprenant un groupe tétrazole, un groupe triazole, un groupe thiadiazole, un groupe oxadiazole, un groupe imidazole, un groupe benzimidazole, un groupe thiazole, un groupe benzthiazole, un groupe oxazole, un groupe benzoxazole, un groupe pyrazole, un groupe pyrrole, un groupe pyrimidine, un groupe pyrazine, un groupe pyridazine, un groupe triazine ou un groupe pyridine, chacun de ces groupes étant le cas échéant substitué.

6. Polymère selon la revendication 1, dans lequel le groupe -S-(L)ₖ-Q répond à la formule suivante 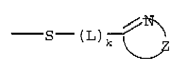 dans laquelle Z représente les atomes nécessaires pour former un groupe aromatique hétérocyclique pentagonal ou hexagonal, le cas échéant condensé à un autre système cyclique.

7. Polymère selon la revendication 6, dans lequel le groupe -S-(L)ₖ-Q répond à la formule suivante : 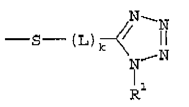 dans laquelle R¹ représente un atome d'hydrogène ou un groupe choisi parmi le groupe comprenant un groupe alkyle, un groupe alcényle, un groupe alcynyle, un groupe cycloalkyle, un groupe hétérocyclique, un groupe aryle, un groupe hétéroaryle, un groupe aralkyle ou un groupe hétéroarylalkyle, chacun de ces groupes étant le cas échéant substitué.

8. Polymère selon la revendication 6, dans lequel le groupe -S-(L)ₖ-Q répond à la formule suivante : 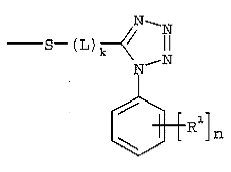 dans laquelle n représente 0, 1, 2, 3, 4 ou 5,
dans laquelle chaque radical R¹ est choisi, de manière indépendante, parmi le groupe comprenant un atome d'hydrogène, un groupe alkyle, un groupe alcényle, un groupe alcynyle, un groupe cycloalkyle, un groupe hétérocyclique, un groupe aryle, un groupe hétéroaryle, un groupe aralkyle ou un groupe hétéroaralkyle, chacun de ces groupes étant le cas échéant substitué, un atome d'halogène, un groupe -SO₂-NH-R²*,* un groupe -NH-SO₂-R⁵, un groupe -CO-NR²-R³, un groupe -NR²-CO-R⁵, un groupe -NR²-CO-NR³-R⁴, un groupe -NR²-CS-NR³-R⁴, un groupe -NR²-CO-O-R³, un groupe -O-CO-NR²-R³, un groupe -O-CO-R⁵, -CO-O-R², un groupe -CO-R², un groupe -SO₃-R², un groupe -O-SO₂-R^{5,} un groupe -SO₂-R², un groupe -SO-R⁵, un groupe -P(=O)(-O-R²)(-O-R³), un groupe -O-P(=O)(-O-R²)(-O-R³), un groupe -NR²-R³, un groupe -O-R², un groupe -S-R², un groupe -CN, un groupe -NO₂ ou un groupe -M-R² où M représente un groupe de liaison divalent contenant de 1 à 8 atomes de carbone;
groupes dans lesquels les radicaux R² à R⁴ sont choisis, indépendamment les uns des autres, parmi le groupe comprenant un atome d'hydrogène ou un groupe choisi parmi le groupe comprenant un groupe alkyle, un groupe alcényle, un groupe alcynyle, un groupe cycloalkyle, un groupe hétérocyclique, un groupe aryle, un groupe hétéroaryle, un groupe aralkyle ou un groupe hétéroaralkyle, chacun de ces groupes étant le cas échéant substitué ;
ou dans lesquels au moins deux groupes choisis parmi respectivement les radicaux R¹, R², R³, R⁴ et R⁵ représentent ensemble les atomes nécessaires pour former une structure cyclique.

9. Polymère selon la revendication 6, dans lequel le groupe -S-(L)ₖ-Q répond à la formule suivante ; 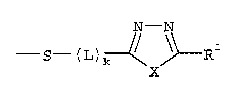 dans laquelle X représente un atome d'oxygène, un atome de soufre ou un groupe NR³,
dans laquelle R¹ est choisi parmi le groupe comprenant un atome d'hydrogène, un groupe alkyle, un groupe alcényle, un groupe alcynyle, un groupe cycloalkyle, un groupe hétérocyclique, un groupe aryle, un groupe hétéroaryle, un groupe aralkyle ou un groupe hétéroaralkyle, chacun de ces groupes étant le cas échéant substitué, un atome d'halogène ou un groupe -L¹-R²,
dans lequel L¹ représente un groupe de liaison,
dans lequel R² est choisi parmi le groupe comprenant un atome d'hydrogène, un groupe alkyle, un groupe alcényle, un groupe alcynyle, un groupe cycloalkyle, un groupe hétérocyclique, un groupe aryle, un groupe hétéroaryle un groupe aralkyle ou un groupe hétéroaralkyle, chacun de ces groupes étant le cas échéant substitué, un atome d'halogène ou un groupe -CN,
dans lequel R³ est choisi parmi le groupe comprenant un atome d'hydrogène, un groupe alkyle, un groupe alcényle, un groupe alcynyle, un groupe cycloalkyle, un groupe hétérocyclique, un groupe aryle, un groupe hétéroaryle, un groupe aralkyle ou un groupe hétéroaralkyle, chacun de ces groupes étant le cas échéant substitué,
ou dans lequel au moins deux groupes choisis parmi les radicaux R¹, R² et R³ représentent les atomes nécessaires pour former une structure cyclique.

10. Polymère selon la revendication 6, dans lequel le groupe -S-(L)ₖ-Q répond à la formule suivante : 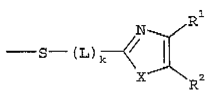 dans laquelle X représente un atome d'oxygène, un atome de soufre ou un groupe NR⁴,
dans laquelle R¹ et R² sont choisis, de manière indépendante, parmi le groupe comprenant un atome d'hydrogène, un groupe alkyle, un groupe alcényle, un groupe alcynyle, un groupe cycloalkyle, un groupe hétérocyclique, un groupe aryle, un groupe hétéroaryle, un groupe aralkyle ou un groupe hétéroaralkyle, un atome d'halogène ou un groupe -L¹-R³,
dans laquelle L¹ représente un groupe de liaison,
dans laquelle R³ est choisi parmi le groupe comprenant un atome d'hydrogène, un groupe alkyle, un groupe alcényle, un groupe alcynyle, un groupe cycloalkyle, un groupe hétérocyclique, un groupe aryle, un groupe hétéroaryle, un groupe aralkyle ou un groupe hétéroaralkyle, chacun de ces groupes étant le cas échéant substitué, un atome d'halogène ou un groupe -CN,
dans lequel R⁴ est choisi parmi le groupe comprenant un atome d'hydrogène, un groupe alkyle, un groupe alcényle, un groupe alcynyle, un groupe cycloalkyle, un groupe hétérocyclique, un groupe aryle, un groupe hétéroaryle, un groupe aralkyle ou un groupe hétéroaralkyle, chacun de ces groupes étant le cas échéant substitué,
ou dans lequel au moins deux groupes choisis parmi les radicaux R², R², R³ et R⁴ représentent les atomes nécessaires pour former une structure cyclique.

11. Polymère selon la revendication 6, dans lequel le groupe -S-(L)ₖ-Q répond à la formule suivante : 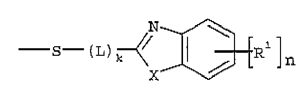 dans laquelle n représente 0, 1, 2, 3 ou 4,
dans laquelle X représente un atome d'oxygène, un atome de soufre ou un groupe NR⁵,
dans laquelle chaque radical R¹ est choisi, de manière indépendante, parmi le groupe comprenant un atome d ' hydrogène, un groupe alkyle, un groupe alcényle, un groupe alcynyle, un groupe cycloalkyle, un groupe hétérocyclique, un groupe aryle, un groupe hétéroaryle, un groupe aralkyle ou un groupe hétéroaralkyle, chacun de ces groupes étant le cas échéant substitué, un atome d'halogène, un groupe -SO₂-NH-R², un groupe -NH-SO₂-R⁵, un groupe -CO-NR²-R³, un groupe -NR₂-CO-R⁵, un groupe -NR²-CO-NR³-R⁴, un groupe -NR²-CS-NR³-R⁴, un groupe -NR²-CO-O-R³, un groupe -O-CO-NR²-R³, un groupe -O-CO-R⁵, -CO-O-R², un groupe -CO-R², un groupe -SO₃-R², un groupe -O-SO₂-R⁵, un groupe -SO₂-R², un groupe -SO-R⁵, un groupe -P(=O)(-O-R²)(-O-R³), un groupe -O-P(=O)(-O-R²)(-O-R³), un groupe -NR²-R³, un groupe -O-R², un groupe -S-R², un groupe -CN, un groupe -NO₂ ou un groupe -M-R² où M représente un groupe de liaison divalent contenant de 1 à 8 atomes de carbone ;
groupes dans lesquels les radicaux R² à R⁵ sont choisis, indépendamment les uns des autres, parmi le groupe comprenant un atome d'hydrogène ou un groupe choisi parmi le groupe comprenant un groupe alkyle, un groupe alcényle, un groupe alcényle, un groupe cycloalkyle, un groupe hétérocyclique, un groupe aryle, un groupe hétéroaryle, un groupe aralkyle ou un groupe hétéroarylalkyle, chacun de ces groupes étant le cas échéant substitué ;
dans lequel R⁶ est choisi parmi le groupe comprenant un atome d'hydrogène, un groupe alkyle, un groupe alcényle, un groupe alcynyle, un groupe cycloalkyle, un groupe hétérocyclique, un groupe aryle, un groupe hétéroaryle, un groupe aralkyle ou un groupe hétéroaralkyle, chacun de ces groupes étant le cas échéant substitué,
ou dans lesquels au moins deux groupes choisis parmi respectivement les radicaux R¹, R², R³, R⁴, R⁵ et R⁶ représentent ensemble les atomes nécessaires pour former une structure cyclique.

12. Polymère selon la revendication 6, dans lequel le groupe -S-(L)ₖ-Q répond à la formule suivante : 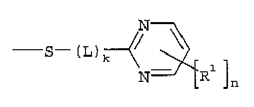 dans laquelle n représente 0, 1, 2 ou 3,
dans laquelle chaque radical R¹ est choisi, de manière indépendante, parmi le groupe comprenant un atome d'hydrogène, un groupe alkyle, un groupe alcényle, un groupe alcynyle, un groupe cycloalkyle, un groupe hétérocyclique, un groupe aryle, un groupe hétéroaryle, un groupe aralkyle ou un groupe hétéroaralkyle, chacun de ces groupes étant le cas échéant substitué, un atome d'halogène, un groupe SO₂-NH-R², un groupe -NH-SO₂-R⁵, un groupe -CO-NR²-R³, un groupe -NR²-CO-R⁵, un groupe -NR²-CO-NR³-R⁴, un groupe -NR²-CS-NR³-R⁴, un groupe -NR²-CO-O-R³, un groupe -O-CO-NR²-R³, un groupe -O-CO-R⁵, -CO-O-R², un groupe -CO-R², un groupe -SO₃-R², un groupe -O-SO₂-R⁵, un groupe -SO₂-R², un groupe -SO-R⁵, un groupe -P(=O)(-O-R⁵)(-O-R³), un groupe -O-P(=O)(-O-R²)(-O-R³), un groupe -NR²-R³, un groupe -O-R², un groupe -S-R², un groupe -CN, un groupe -NO₂ ou un groupe -M-R² où M représente un groupe de liaison divalent contenant de 1 à 8 atomes de carbone ;
groupes dans lesquels les radicaux R² à R⁴ sont choisis, indépendamment les uns des autres, parmi le groupe comprenant un atome d'hydrogène ou un groupe choisi parmi le groupe comprenant un groupe alkyle, un groupe alcényle, un groupe alcényle, un groupe cycloalkyle, un groupe hétérocyclique, un groupe aryle, un groupe hétéroaryle, un groupe aralkyle ou un groupe hétéroarylalkyle, chacun de ces groupes étant le cas échéant substitué ;
dans lequel R⁵ est choisi parmi le groupe comprenant un atome d'hydrogène, un groupe alkyle, un groupe alcényle, un groupe alcynyle, un groupe cycloalkyle, un groupe hétérocyclique, un groupe aryle, un groupe hétéroaryle, un groupe aralkyle ou un groupe hétéroaralkyle, chacun de ces groupes étant le cas échéant substitué,
ou dans lesquels au moins deux groupes choisis parmi respectivement les radicaux R¹, R² R³, R⁴ et R⁵ représentent ensemble les atomes nécessaires pour former une structure cyclique.

13. Polymère selon la revendication 6, dans lequel le groupe -S-(L)ₖ-Q répond à la formule suivante :

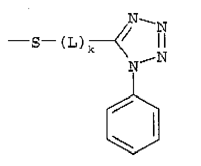

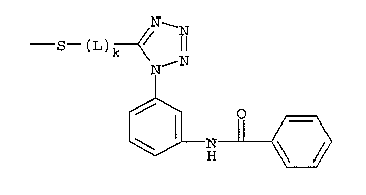

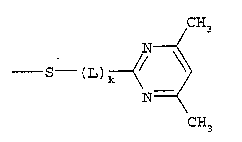

14. Polymère selon l'une quelconque des revendications précédentes, dans lequel ledit polymère comprenant une unité monomère phénolique est une novolaque, un résol ou un polyvinylphénol.

15. Précurseur de cliché d'impression lithographique thermosensible comprenant un support possédant une surface hydrophile et une couche oléophile, prévue sur la surface hydrophile, ladite couche comprenant un agent absorbant la lumière infrarouge et un polymère selon l'une, quelconque des revendications précédentes.

16. Précurseur de cliché d'impression lithographique selon la revendication 15, dans lequel ladite couche comprend en outre un inhibiteur de la dissolution et dans lequel ledit précurseur est un précurseur de cliché d'impression lithographique à traitement positif.

17. Précurseur de cliché d'impression lithographique selon la revendication 16, dans lequel ledit inhibiteur de la dissolution est choisi parmi le groupe comprenant :
- un composé organique qui comprend au moins un groupe aromatique et un site de liaison hydrogène, et/ou
- un polymère ou un agent tensioactif comprenant des unités de siloxane ou des unités perfluoroalkyle.

18. Utilisation d'un polymère, selon l'une quelconque des revendications 1 à 14, dans une couche d'un précurseur de cliché d'impression lithographique thermosensible à traitement positif, comprenant en outre :
- un agent absorbant le rayonnement infrarouge, et
- un inhibiteur de la dissolution,
pour augmenter la résistance chimique de la couche vis-à-vis des liquides d'impression et des produits chimiques de presse.

19. Précurseur de cliché d'impression lithographique selon la revendication 15, dans lequel ladite couche comprend en outre un acide de Bronsted latent et un composé réticulable en présence d'un acide, et dans lequel ledit précurseur est un précurseur de cliché d'impression lithographique à traitement négatif.

20. Utilisation d'un polymère, selon l'une quelconque des revendications 1 à 14, dans une couche d'un précurseur de cliché d'impression lithographique thermosensible à traitement négatif, comprenant en outre :
- un agent absorbant l'infrarouge,
- à l'acide de Bronsted latent, et
- un composé réticulable en présence d'un acide,
pour augmenter la résistance chimique de la couche vis-à-vis des liquides d'impression et des produits chimiques de presse.
